# EUROPEAN PATENT SPECIFICATION

(11) **EP 4 327 221 B1**
(45) Date of publication and mention of the grant of the patent: **11.11.2026**
(21) Application number: 22791260.7
(22) Date of filing: 14.04.2022
(51) Int. Cl.: G06F 21/55, G06F 21/57, G06N 3/08, G06N 3/00, G06N 3/02, G06N 20/00, G06N 3/126, G06N 3/094, G06N 5/01, G06N 20/20, G06N 3/082

(54) **DEVICE, SYSTEM, AND METHOD FOR PROTECTING MACHINE LEARNING, ARTIFICIAL INTELLIGENCE, AND DEEP LEARNING UNITS**
VORRICHTUNG, SYSTEM UND VERFAHREN ZUM SCHUTZ VON MASCHINENLERN-, KUNSTINTELLIGENZ- UND TIEFENLERNEINHEITEN
DISPOSITIF, SYSTÈME ET PROCÉDÉ DE PROTECTION D'UNITÉS D'APPRENTISSAGE AUTOMATIQUE, D'INTELLIGENCE ARTIFICIELLE ET D'APPRENTISSAGE PROFOND

(30) Priority: 19.04.2021 US 202163176375 P
(43) Date of publication of application: 28.02.2024
(73) Proprietor: Deepkeep Ltd., 7620545 Rehovot (IL)
(72) Inventor: OHAYON, Rony, 7620545 Rehovot (IL); WAGNER, Jonathan, 7620545 Rehovot (IL)
(74) Representative: Potter Clarkson
(86) International application number: PCT/IL2022/050397
(87) International publication number: WO 2022/224246

(56) References cited:
- US-A1- 2019 050 564
- US-A1- 2019 188 562
- US-A1- 2020 143 045
- US-A1- 2020 167 471
- US-A1- 2020 410 399
- US-A1- 2021 073 376
- US-A1- 2021 110 045
- US-A1- 2021 110 045
- ALEKSANDER MADRY; ALEKSANDAR MAKELOV; LUDWIG SCHMIDT; DIMITRIS TSIPRAS; ADRIAN VLADU: "Towards Deep Learning Models Resistant to Adversarial Attacks", ARXIV.ORG, CORNELL UNIVERSITY LIBRARY, 201 OLIN LIBRARY CORNELL UNIVERSITY ITHACA, NY 14853, 19 June 2017 (2017-06-19), 201 Olin Library Cornell University Ithaca, NY 14853 , XP081281782

## Description

### Field

Some embodiments relate to the field of electronic systems

### Background

Millions of people use electronic devices on a daily basis, such as, desktop computers, laptop computers, smartphones, tablets, or the like. Electronic devices are used for a variety of tasks; for example, to perform online purchases and transactions, to watch movies and consume digital content, to send and receive electronic mail (email) messages, to engage in online chat or Instant Messaging (IM), to participate in audio conferences or video conferences, to play games, or the like.

Some computer servers or applications may utilize Machine Learning (ML), Deep Learning (DL), Artificial Intelligence (Al), and other techniques, in order to analyze data and to generate analysis results or insights.

Publication US 2021/0110045 A1 describes systems and methods for adding adversarial robustness to trained machine learning models. It describes a method for securing trained machine learning models in a computing environment. It provides hardened machine learning models that are secured against adversarial attacks, by adding adversarial protection to one or more trained machine learning models; such as, by adding neural network layers to trained machine learning models.

Publication US 2021/0073376 A1 describes methods and systems for securing machine learning models. Hardened machine learning models are secured against adversarial attacks, by applying combinations of: selected preprocessing operations from machine learning models, a dataset used for hardening machine learning models, a list of preprocessors, and a selected number of learners.

### Summary

The present invention is defined by the claims. Some embodiments include devices and methods for protecting Machine Learning, Artificial Intelligence, and Deep Learning units or engines, as well as units or engines that perform Reinforcement Learning, or that utilize a Neural Network (NN), or that perform AI tasks.

Systems and methods for protecting machine learning engines, artificial intelligence engines, and deep learning engines. An Offline Protection Unit is configured to analyze one or more characteristics of a Protected Engine, and to perform offline fortification of the Protected Engine against attacks by changing operational properties or operational parameters of the Protected Engine to reduce its vulnerability to attacks. An Online Protection Unit is configured to perform analysis of at least one of: (i) inputs that are directed to be inputs of the Protected Engine, (ii) outputs that are generated by the Protected Engine; and based on the analysis, to dynamically perform online fortification of the Protected Engine against attacks by dynamically changing operational properties or operational parameters of the Protected Engine to reduce its vulnerability to attacks.

Some embodiments may provide additional and/or other benefits and/or advantages.

### Brief Description of the Drawings

Fig. 1 is a schematic block-diagram illustration of a system and its components, in accordance with some demonstrative embodiments.
Fig. 2 is a schematic block-diagram illustration of a system and its multi-layer architecture, in accordance with some demonstrative embodiments.

### Detailed Description of Some Demonstrative Embodiments

The Applicants have realized that various electronic systems and information processing systems utilize Machine Learning (ML) units or analysis engines, Deep Learning (DL) units or analysis engines, and/or Artificial Intelligence (AI) units or analysis engines, in order to analyze or process data and to generate outputs (e.g., results, predictions, estimates, determination results, conclusions, insights, correlations, recommendations, actions (e.g., for robotic systems), or the like). Such ML / DL / AI units are sometimes utilized to accomplish a task for which no fully deterministic and satisfactory algorithm is available.

The Applicants have realized that some ML / DL / AI systems may be subject to attacks or cyber-attacks or compromise attempts, by adversaries or competitors or hackers or third-parties. Some embodiments may provide devices and methods for protecting ML / DL / AI systems against such attacks, or for mitigating or curing such attacks, or for curing or reversing or decreasing or isolating the damage caused (or attempted) by such attacks.

For example, the Applicants have realized that some ML / DL / AI systems may be subject to an Evasion Attack, or an Adversarial Examples Attack. In such attack, for example, data that is fed to the ML / DL / AI system includes "adversarial examples"; input that should include only correct images of Cats, may now include (I) an image of a dog that is labeled as a cat, or (II) and image of a cat that was manipulated by adding to it "noise" or minuscule details that make the image still appear to be a cat in human eyes but that throws-off or confuses a classifier unit. In some situations, realized the Applicants, even a careful tampering with only few pixels in a digital image, may cause confusion and wrong classification at an ML / DL / AI system. The Applicants have realized that in such Evasion Attacks, the attacker does not attempt to penetrate into the ML / DL / AI system or to modify its manner of operation; but rather, the Evasion Attack injects or feeds or introduces to the ML / DL / AI system incorrect data, or incorrectly-classified data, or machine-confusing data, or data augmented with digital "noise" or addendums, or entirely incorrect data, or partially-incorrect data, or partially-replaced data, or data that was otherwise tampered with or manipulated, eventually causing the ML / DL / AI system to generate output that is different than what was expected by the designer of the ML / DL / AI system. The Applicants have also realized that such Evasion Attacks are not limited to image analysis or computer vision systems; but may similarly be initiated against voice recognition systems, text analysis systems, video analysis / recognition systems, image analysis / recognitions systems, audio analysis / recognitions systems, tabular data analysis systems, LIDAR analysis systems, signal analysis systems, timer series analysis systems, malware detection systems, financial systems and Fin-Tech systems (e.g., electronic loan issuance system, electronic mortgage issuance system, electronic credit card issuance system, electronic bank account opening system, electronic brokerage account or securities account opening system), ML / DL / AI systems that utilize (or, that operate on) real time or near-real-time data or data-items or data-streams (e.g., a live or near-live or real-time or near-real-time video stream, or video frames stream, or stock quotes stream, or securities transactions streams; an automated trading system; an automated vehicular driving system, and autonomous vehicular driving system, an Advanced Drive-Assistance System (ADAS), an automated industrial system that performs monitoring or sensing and analysis of data), a "black box" type of ML / DL / AI unit (e.g., that performs therein one or more ML / DL / AI tasks based on an input signal and that generates an output signal, such as a hardware component of a vehicle that performs ML / DL / AI tasks), and/or other systems.

The Applicants have also realized that some ML / DL / AI systems may be subject to a Stealing Attack, including a Model stealing attack and/or a Dataset stealing attack. For example, an adversary or a competitor may perform model extraction or model reconstruction or model imitation based on outputs generated by the ML / DL / AI system; or may leverage or improve the capabilities or the efficiency or the accuracy of the attacker's ML / DL / AI system (e.g., which trained on a public dataset) by utilizing or leveraging outputs from a competitor's ML / DL / AI system (e.g., which trained on a proprietary or private dataset); or may generate inferences (e.g., including extraction of personal data or private data) about data that is utilized by a ML / DL / AI system based on inquiries sent to that ML / DL / AI system and analysis of the outputs generated by that ML / DL / AI system.

The Applicants have further realized that some ML / DL / AI systems may be subject to a Reprogramming Attack. For example, the attacker leverages or abuses his ability to send queries to an existing ML / DL / AI system and to receive outputs from it, in order to achieve a new task that was not intended to be achieved (or facilitated) by the owner of the ML / DL / AI system. For example, an object detection ML / DL / AI system may be used or abused by an attacker to actually perform Optical Character Recognition (OCR) of texts; an image recognition ML / DL / AI system may be used or abused by an attacker to actually generate medical diagnosis results from images of people; or the like.

The Applicants have further realized that some ML / DL / AI systems may be subject to a Poisoning Attack. For example, the attacker performs Corruption Poisoning, by injecting to the training dataset a small or relatively small number of carefully-selected malicious examples, which may significantly damage or corrupt the operational accuracy of the ML / DL / AI system. In another example, the attacker performs Backdoor Poisoning, by injecting to the training dataset a small number of carefully-selected malicious examples that include a secret code or indicia, causing the ML / DL / AI system to generally operate as intended when encountering regular inputs, but also causing that ML / DL / AI system to classify a special type of input (which includes a similar secret code or indicia) in accordance with the attacker's intent when such input is fed to the ML / DL / AI system. The Applicants have realized that a Poisoning Attack may attempt to modify the operation of an ML / DL / AI system to operate in a particular manner that is desired by the attacker, in general or in response to a particular subsequent query or type of query; by injecting or introducing into the training dataset one or more malicious training data items (e.g., injecting a relatively small number of malicious data-items into the training dataset, compared to the large size of the entire training dataset). In some situations, such Poisoning Attack may be performed in real time or in near-real-time, or as a one-time event or as a periodic set of events; and may be performed directly towards the AI engine or AI system, and/or may be performed indirectly towards one or more units that collect data and periodically update or add data that an AI engine uses; including (for example) a recommender system or other AI-based systems.

The Applicants have realized that there is a need to protect ML / DL / AI systems against such attacks, as well as against other types of attacks or compromise attempts.

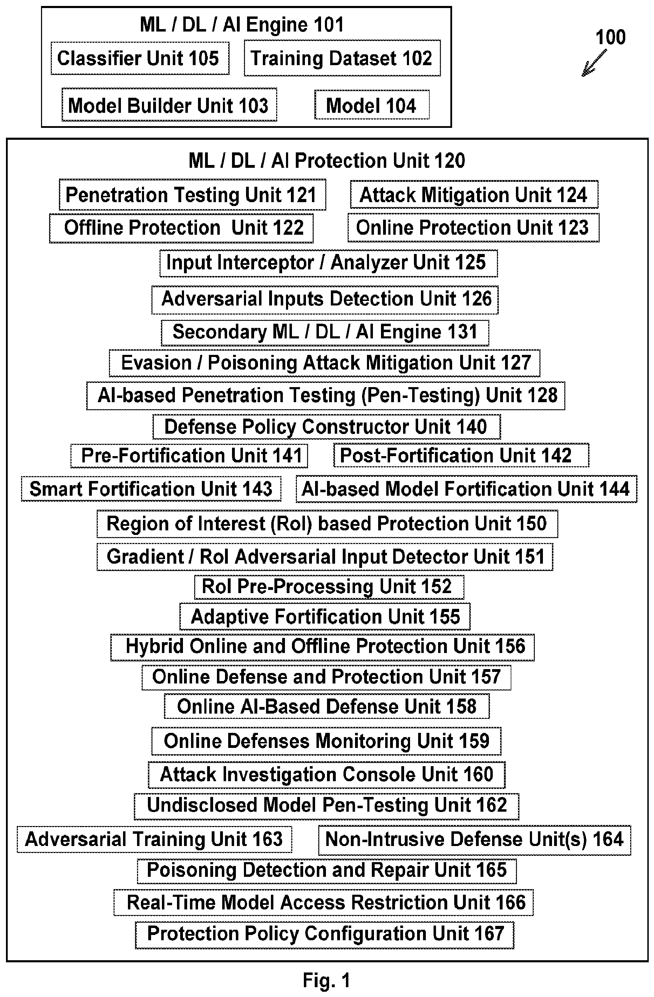

Reference is made to Fig. 1, which is a schematic block-diagram illustration of a system 100, in accordance with some demonstrative embodiments. System 100 may comprise an ML / DL / AI Engine 101, which is the unit (or sub-system, or system, or computer, or server, or set of computerized modules) that is being protected against attacks or abuse or malicious activity. The ML / DL / AI Engine 101 may also be referred to herein as "the protected ML / DL / AI Engine 101", or "the ML / DL / AI Engine 101 being protected or evaluated".

The ML / DL / AI Engine 101 may comprise or may use, for example: a Training Dataset 102 which is a large dataset of examples or labeled examples or already-classified examples; a Model Builder Unit 103 which constructs and/or updates a Model 104; a Classifier Unit 105 (or a feature-izer or featurizer, or labeler unit); and additional units or components, for example, an Evaluator unit, a Performance Monitor unit, a Ground Truth Collector unit, an Orchestrator unit that controls and commands other units, a Model Server optionally associated with an Application Programming Interface (API) to enable efficient reception of inputs and generation of outputs, a Front-End unit to provide metrics and to generate textual clarifications for numerical results, or the like).

In accordance with some embodiments, an ML / DL / AI Protection Unit 120 may protect the ML / DL / AI Engine 101 from or against cyber-attacks or attempts to compromise its operation, or from one or more particular attacks against such ML / DL / AI systems. For example, the ML / DL / AI Protection Unit 120, or one or more of its components or units or sub-systems (e.g., the Online Protection Unit 123, and/or other components of the ML / DL / AI Protection Unit 120) may be implemented using modular architecture which allows scalability and may provide a cloud service for multiple users, or may be installed locally as a licensed software component; or may be installed locally or on a network as a dedicated hybrid hardware and software unit; or may be operating as a "firewall device for ML / DL / AI engines", which may be, for example, a locally-installed "firewall device for ML / DL / AI engines", or a co-located "firewall device for ML / DL / AI engines", or a server-based "firewall device for ML / DL / AI engines", or a cloud-computing based "firewall device for ML / DL / AI engines", or a dedicated local or remote or cloud-based machine or unit which operates as a "firewall device for ML / DL / AI engines", or as a software unit which may be purchased or licensed, or as a hybrid hardware-and-software unit, or using other suitable deployment or configuration schemes. It is further noted that the above-mentioned implementation schemes and/or architecture may be utilized, in some embodiments, for implementing the entirety of the ML / DL / AI Protection Unit 120, or a particular component of ML / DL / AI Protection Unit 120, or a particular subset or group of components of ML / DL / AI Protection Unit 120.

The ML / DL / AI Protection Unit 120 may comprise, for example: a Penetration Testing Unit 121, configured to automatically or semi-automatically test or evaluate the robustness of the ML / DL / AI Engine 101 against different threats; an Offline Protection Unit 122, which operates to modify the structure and/or operation of the ML / DL / AI Engine 101 in order to enhance its security and resilience against attacks; an Online Protection Unit 123, which may perform one or more defensive services that protect the ML / DL / AI Engine 101 in real time or near real time.

In some embodiments, the Offline Protection Unit 122 may implement offline defense techniques for protecting the ML / DL / AI Engine 101. The Applicants have realized that some the ML / DL / AI Engines may assume an offline setting, such that the the ML / DL / AI pipeline is fortified or secured during its development stage, and the resulting secure pipeline is then deployed and becomes available for receiving and processing incoming queries or inputs. In contrast to this approach, realized the Applicants, an online fortification technique operates to apply defenses to the ML / DL / AI Engine 101 online, by an external component or unit that has an interface to the AI pipeline in deployment, or that is otherwise operably associated with the ML / DL / AI Engine 101, or that is configured to operate as a gateway or as a filter or as a monitoring unit for incoming queries.

The Applicants have further realized that the online defense techniques in accordance with some embodiments may provide various advantages; for example, it may allow dynamic and/or modular application of defense techniques, it may allow easier and/or faster integration of defense techniques, it may enable protection of "black box" pipelines, and/or it may allow better separation between the development of security measures and the development of the ML / DL / AI functionality, and/or by providing online or cloud-based or remote protection systems or protection layers (e.g., remote or cloud-based detector units) which are non-intrusive and do not modify (and/or do not interfere with the regular operation of) the original ML / DL / AI model which the user (namely, the owner or operator or administrator or developer of the ML / DL / AI system) spent efforts and resources to construct and to fine-tune.

The Applicants have also realized that "offline protection", such as via the Offline Protection Unit 122, may provide additional and/or other benefits or advantages. In accordance with some embodiments, "offline protection" of the ML / DL / AI Engine 101 may include, for example, receiving or analyzing or accessing the ML / DL / AI Engine 101 prior to its deployment, and performing one or more operations and/or modifications and/or additions in order to upgrade or secure or fortify the ML / DL / AI Engine 101 against attacks; and generating or returning an updated or upgraded or augmented version of the ML / DL / AI Engine 101, which is more secure or more fortified or more resilient than the original version thereof, and which can then be utilized and deployed.

In some embodiments, the Offline Protection Unit 122 may perform (or may be utilized for performing) one or more of the following protection and fortification techniques: (A) Dataset fortification, dataset "hardening", dataset augmentation, pre-processing operations, data sanitization operations, data pruning operations; (B) Architecture fortification or architecture "hardening", such as, by modifying the structure and/or architecture of Neural Networks (or other AI / ML / DL algorithms), by modifying the structure and/or architecture of the AI / ML / DL Pipeline, by replacing or removing or insecure elements (e.g., a Deep Neural Network (DNN) or other component) with a secure version or a more secure version thereof; (C) System parameters modification, for example, based on re-training, adversarial training, threshold modification, modification or introduction of threshold values, modification or introduction of operational conditions; (D) Architecture Augmentation, for example, by creation of ensembles of models, adding or modifying pre-processing elements or components, adding post-processing elements or components; (E) Adding attack detectors to the AI / ML / DL Pipeline, which may generate a notification or raise a flag or throw an exception when an input (or, a series or set of inputs) are identified as malicious or are estimated or determined to be malicious; (F) Other suitable techniques. In some embodiments, the protection system or platform may actively add Attack Detector(s) to the pipeline that the Protected Engine is part of, and/or may construct such a pipeline by adding Attack Detector(s) to a stand-alone Protected Engine; and/or by adding or invoking online Attack Detectors and/or offline Attack detectors; and/or by adding or invoking Attack Detectors that are stateless or that do not necessarily (or at all) maintain state (e.g., they analyze or classify each input signal by itself, ignoring previously-received or subsequently-received input signals); and/or by adding or invoking Attack Detectors that are stateful or that maintain state (e.g., they analyze or classify each input signal not only by itself, but also in relation to or in combination with one or more previously-received and/or subsequently-received input signals, thereby predicting or analyzing over a multiple-inputs set or series).

In some embodiments, at least some of the offline protection operations are performed automatically or semi-automatically by the Offline Protection Unit 122. For example, the Offline Protection Unit 122 may automatically analyze the structure and/or operations of the ML / DL / AI Engine 101; may automatically detect that the ML / DL / AI Engine 101 lacks a particular type of pre-processing component or post-processing component; and may automatically or semi-automatically (e.g., subject to an approval from a human administrator) augment the ML / DL / AI Engine 101 with the missing component(s). Similarly, the Offline Protection Unit 122 may automatically analyze the structure and/or operations of the ML / DL / AI Engine 101; may automatically detect that the ML / DL / AI Engine 101 lacks a particular filtering mechanism (e.g., a rate-limiting component or filter, that limits the number or the frequency of incoming queries from a particular sender); and may add or introduce such component or filter. In some embodiments, the protection operation(s) and/or the mitigation operation(s) may be dynamically selected by the protection platform, based on a set of rules for such operations selection, and/or based on the estimated or quantified severity of an estimated problem or an estimated attack, and/or based on the resources and protection techniques that are relevant and are available for protecting this particular ML / DL / AI engine of this particular system.

For example, the protection platform or its Offline Protection Unit 122 may submit 500 rapid queries within 1 second to the protected ML / DL / AI engine, and may observe that the ML / DL / AI engine struggles to generate timely output (e.g., within N milliseconds of each input signal, on average), and may thus deduce that the ML / DL / AI engine most probably lacks or does not apply a Rate-Limiting Pre-Processing filter or gate or mechanism, or that such Rate-Limiting module may exist but is improperly configured; and the protection platform may thus automatically recommend to add such Pre-Processing unit or module, and in some implementations may automatically add such pre-processing module or unit automatically or semi-automatically.

Similarly, the protection platform may detect that output signals that are generated by the ML / DL / AI engine suffer from anomalies or inconsistencies which may be attributed to lack or (or mis-configuration of) a post-processing unit or module, such as lack of (or mis-configuration of) a pruning routine, a rule filtering scheme, a knowledge integration scheme, a module for shrinking or pruning or truncating a decision tree or decision rules or association rules or classification rules, and/or other post-processing filters that attempt to remove or filter-out "noisy" or imprecise outputs.

Similarly, the Offline Protection Unit 122 may automatically detect that the ML / DL / AI Engine 101 utilizes a particular condition or threshold value that causes the ML / DL / AI Engine 101 to be more prone or less resilient to attacks; and may automatically increase or decrease or modify such threshold value, or may automatically modify or cancel or augment the condition, based on pre-defined list of rules for performing such modifications if a particular set of parameters or thresholds or conditions is detected. Other suitable techniques may be used.

The ML / DL / AI Protection Unit 120 may further comprise, optionally, an Attack Mitigation Unit 124, which may be a separate unit from the above-mentioned units, or may be integrated with one or more of the above-mentioned unit, or may operate in conjunction with one or more of the above-mentioned units, or may be comprised within one or more of the above-mentioned units, or may comprise therein one or more of the above-mentioned units. For example, the Attack Mitigation Unit 124 may collect or receive inputs or insights from one or more of the other units 121-123, and/or may fuse together such inputs to generate additional insights, and may trigger or initiate or execute one or more mitigation operations in order to decrease or eliminate or stop or reduce or pause a particular damage or abuse or fraudulent use or adversarial use of the ML / DL / AI Engine 101. Such mitigation operations may include, for example: blocking or quarantining or discarding some (or most, or all) of the incoming traffic or queries or requests that are determined by the ML / DL / AI Protection Unit 120 to be of a malicious nature or to originate from an adversarial entity; blocking or quarantining or discarding some (or most, or all) of the outgoing traffic or results or insights or outputs that were supposed to be outgoing to an entity that is determined by the ML / DL / AI Protection Unit 120 to be to be outgoing to an entity that of a malicious nature or to originate from an adversarial entity; significantly slowing down the rate or speed of processing requests or queries of such adversarial entity, and/or the rate or speed of sending back results or outputs to such adversarial entity; modifying and/or manipulating outputs and/or query results prior to sending them to such adversarial entity, or (in some implementations) even intentionally sending out false results or incorrect results or opposite results or modified results, or random or pseudo-random results, to such adversarial entity; pruning or diluting or purging or cleaning-up a training set or a training dataset or an examples dataset, that was or that is utilized by the ML / DL / AI Engine 101, such as by removing or deleting or excluding or discarding one or more examples or data-points or data-items that are determined to be of adversarial nature, replacing or correcting or re-labeling or re-classifying one or more training examples or training data-points, optionally by utilizing a human classifier and/or by utilizing another computerized service or another ML / DL / AI Engine to re-classify or to re-label particularly only such data-points; re-performing a training session and/or re-building of the ML / DL / AI model based on the updated or pruned or purged or diluted dataset; generating a notification or warning message or alert message, indicating abuse or the ML / DL / AI Engine 101, and sending or transmitting such message to one or more pre-defined parties (e.g., an administrator entity of the ML / DL / AI Engine 101; a law enforcement agency) and/or to one or more dynamically-defined parties (e.g., to a contact address of the entity that is determined to be a malicious entity or an adversarial entity; to an Internet Service Provider (ISP) of such adversarial entity; to a domain registrar of such adversarial entity; to a server hosting facility of such adversarial entity). In some embodiments, in addition to or instead of dataset manipulations and/or re-training, other protection and mitigation methods may be applied; for example, architecture modification (e.g., replacing and/or adding and/or removing and/or quarantining elements or sub-units of the protected ML / DL / AI Engine 101; or modifying one or more operational parameters thereof); replacing a current version of the protected ML / DL / AI Engine 101 with a previous or prior version thereof (e.g., obtained from a versioning unit or repository that stores previous versions of the protected ML / DL / AI Engine 101); modifying or updating or replacing a defense policy or a protection policy that enables the user (e.g., the administrator or owner of the ML / DL / AI Engine 101) to configure and to balance the system's requirements or operational parameters or operational constraints, such as by automatically switching from operating in accordance with a first pre-defined protection policy to operating in accordance with a second, different, pre-defined protection policy (e.g., out of a pool or bank or array of pre-defined protection policies); or the like.

In some embodiments, the ML / DL / AI Protection Unit 120 may utilize a semiautomatic and/or semi-supervised process for attack detection, attack mitigation, and protection. The ML / DL / AI Protection Unit 120 operates to achieve accurate classification of inputs that are fed into the into the ML / DL / AI Engine 101, as either (I) legitimate inputs (e.g., non-adversarial; genuine; non-attack-related), or (II) non-legitimate or illegitimate inputs (e.g., adversarial inputs, attack-related inputs, compromising inputs, malicious inputs, fraudulent inputs, attacking inputs, abusing or abusive inputs).

In a demonstrative example, the ML / DL / AI Engine 101 is configured to perform image classification of vehicular license plate number (or strings) that appear in photos or images. When an input (e.g., an image with a license plate in it) is received at an entry point of the ML / DL / AI Engine 101, or immediately prior to that entry point, the ML / DL / AI Protection Unit 120 utilizes an Input Interceptor / Analyzer Unit 125 that intercepts the incoming image and applies to it an automatic attack-detection algorithm that are configured to operate in a strict manner to reduce false positive errors, such that if the output of the attack-detection algorithm is that the image is not malicious then the image is indeed not attack-related. Since the algorithm is strict, it does have some percentage of false positives (e.g., determining that a particular photo is malicious or attack-related, while in fact it is not). In order to remedy this, when an input is detected as attack-related, such input is then routed automatically to a computing terminal for manual human inspection by a human labeler or a human classifier. If the identification of the photo content by the human labeler is the same as the original identification by the ML / DL / AI Protection Unit 120, then the attack determination is considered an error and such error is ignored or discarded (and/or is stored in a side repository for additional learning and in order to enable the ML / DL / AI Protection Unit 120 to learn from such errors and to improve the system). In contrast, if the identification of the photo content by the human labeler is different from the original identification produced by the ML / DL / AI Engine 101, then this input (e.g., this photo) is considered malicious or adversarial or part of an attack against the ML / DL / AI Engine 101, and is marked or reported as such, and the true label or the correct label as set by the human labeler is utilized as the correct output.

In some embodiments, optionally, instead of using a human labeler (or human classifier), or in addition to it, the ML / DL / AI Engine 101 that is being protected against attacks (or against malicious inputs or adversarial inputs) may utilize a secondary (e.g., proprietary, or publicly available) similar ML / DL / AI Engine, or a plurality of such secondary ML / DL / AI Engines, solely for the purpose of detecting such malicious input(s). For example, Company A is developing and/or operating its own ML / DL / AI Engine 101, which is tailored to correctly classify detect objects in photos that pertain specifically to animals. Company A receives or obtains a particular photo, "Tiger.jpg", which is pre-labeled or pre-classified as a tiger. Instead of automatically relying on such pre-label or pre-classification, the ML / DL / AI Protection Unit 120 (which protects the ML / DL / AI Engine 101) sends that particular photo to a third-party classification service and/or to a public classification service, which does not necessarily specializes in this field (animals); such as, to the "reverse image search" engine of Google or Bing (or to both of them); and such "secondary" engine indicates that the photo "Tiger.jpg" is actually classified by it as a "sofa" or "couch" (e.g., it actually depicts a sofa having a fabric that is patterned like a tiger skin). Based on the classification by such "secondary" engine, or by a majority of such secondary engines, or by at least one of such secondary engines, the ML / DL / AI Engine 101 that is being protected may determine that the photo "Tiger.jpg" should not be relied upon as a tiger animal, and/or should be discarded or deleted, or should be classified as "sofa", or should be otherwise treated or handled as a malicious input or as adversarial input. Such inquiry towards the "secondary" ML / DL / AI Engine(s) may be performed by a Guarding Unit or a Filtering Unit of the system, or by an Adversarial Inputs Detection Unit 126, which may guard the ML / DL / AI Engine 101 against malicious inputs and may prevent such malicious input from even entering or reaching the ML / DL / AI Engine 101 itself, by using a human labeler, a Secondary ML / DL / AI Engine 131, a set of secondary ML / DL / AI Engines, and/or other methods. Some embodiments may optionally utilize a mechanism that applies a "wisdom of the crowd" technique, in which each one of a plurality of Secondary ML / DL / AI Engines (and optionally, one or more human labelers) is queried for its output or for its result with regard to a particular incoming query (that is incoming to the protected ML / DL / AI Engine 101), and the dominant result or the majority result or the most frequent result (or, a result that is an output of a weighted formula, that allocated different weights to different Secondary ML / DL / AI Engines based on their reputation or trustworthiness or size or speed or other parameters) prevails and is utilized as the "ground truth".

In some embodiments, an Evasion / Poisoning Attack Mitigation Unit 127 may be configured to mitigate or cure an evasion attack or a poisoning attack towards the ML / DL / AI Engine 101. The unit reflects a "backup" operation plan, that is triggered upon detection of such attack(s), and particularly upon detection of an ongoing attack that cannot necessarily be immediately blocked. Evasion / Poisoning Attack Mitigation Unit 127 may have the following functionalities and/or features: (A) Manual Classification Backup Service is Set-Up in a dedicated center, ready to be operative within a short notice (e.g., 15 or 30 or 60 minutes, based on the requirements of the owner of the ML / DL / AI Engine 101 that is being protected); (B) the system detects that the ML / DL / AI Engine 101 is currently being attacked, resulting in incorrect classifications by the ML / DL / AI Engine 101 with regard to all, or at least N percent of, input queries (e.g., N being a pre-defined threshold value, such as 50 or 33 or 25 or other value), or, by utilizing a threshold value or a condition that is based on the percentage of inputs that were determined or estimated to be adversarial (e.g., inputs that belong to, or are associated with, an attack), since detecting an adversarial input may (in some implementations) be easier or more efficient or more accurate than detecting an incorrectly classified input; (C) the attack is identified or suspected, by one or more protection mechanisms, or by other system metrics, system user reports, or other sources (e.g., a detection that an abnormal or excessive number of inputs are received per minute or per hour, or that numerous inputs are incoming from a particular source or entity, or other indicators of a possible attack); (D) the attack mitigation unit is initiated or triggered, switching to manual (e.g., human) classification service that is set up rapidly with multiple human labelers that are familiar with the particular ML / DL / AI task at hand, and routing or re-routing incoming queries to the manual classification service instead of the ML / DL / AI Engine 101; then, (E) once the attack is blocked or ends, the manual mitigation service is stopped, and queries are again routed to the original and automated ML / DL / AI Engine 101.

In some embodiments, the protection platform (e.g., at the offline unit(s), and/or at the online unit(s), and/or at a local or on-premises implementation, and/or via a cloud-computing or remote unit implementation) may detect, and may protect against, a set of two or more Repeated Evasion Attacks, or a group of related Evasion Attacks; such that even if each one of the Evasion Attacks, by itself, is not necessarily detected, the aggregation of multiple events is detected to be a distributed or a multiple-attackers or a coordinated Repeated Evasion attack by multiple attackers or multiple malicious devices, or by a single attacker / single device that performs repeated or repeating (and, not necessarily identical to each other) Evasion Attack events from the same device or from a plurality of devices.

In some embodiments, the system or platform may optionally operate by correlating or matching input signals or inputs that derive from a plurality of distributed instances of a ML / DL / AI model; for example, particularly in a vehicular setting; and may utilize such correlation or matching for attack detection against such ML / DL / AI model or engine.

Some embodiments may include and utilize an AI-based Penetration Testing (Pen-Testing) Unit 128, which evaluates the vulnerability of the ML / DL / AI Engine 101 against different types of attacks in different settings. The AI-based Pen-Testing Unit 128 estimates the robustness level or the resilience level of the ML / DL / AI Engine 101 towards various attacks. The AI-based Pen-Testing Unit 128 collects or obtains data about historic or past attacks, and particularly of penetration attacks and penetration tests (and their corresponding results) that were carried out against this particular ML / DL / AI Engine 101, or against a plurality of ML / DL / AI Engines of the same type of the ML / DL / AI Engine 101 (e.g., historical attacks against image classification engines), or against a plurality of ML / DL / AI Engines in general; and constructs a dataset representing: (I) model features of the ML / DL / AI Engines that were pen-tested, such as, their type, size, architecture features (e.g., layer sizes and types); and (II) results of the penetration tests that were conducted against such ML / DL / AI Engine, such as, pen-test outcome (e.g., success or failure; level of success, percentage of success), accuracy of the ML / DL / AI Engines that were pen-tested, a robustness score or a resilience score or a vulnerability score against particular penetration attacks that were tested. The AI-based Penetration Testing (Pen-Testing) Unit 128 utilizes AI techniques, such as a. Deep Neural Network, to generate predictions regarding the pen-testing output that is forecasted or estimated or predicted with regard to the particular ML / DL / AI Engine 101 that is being evaluated or protected, without actually performing the time-consuming and effort-consuming pen-testing process.

System 100 may further comprise a Policy Design Tool and a Smart Fortification Process for protecting the ML / DL / AI Engine 101. The Applicants have realized that fortification of the ML / DL / AI Engine 101 may be a complex multi-objective constrained optimization problem. The optimization includes, for example, finding or detecting the best subset of defenses that are relevant and available, and choosing or setting or determining the best or most efficient defense parameter values. The optimization is multi-objective, since the defense would optimize robustness against different attacks in different scenarios along with the natural model accuracy. The optimization is constrained since there are limitations on the output model's prediction running time and computational requirements, along with the fortification process duration and memory required for the fortification. Other requirements from the output model may be that the new model will not alter some attributes of the input model, or that the fortification process will only use "black box" access to the original model.

In accordance with some embodiments, a Defense Policy Design Tool, or a Defense Policy Constructor Unit 140, may comprise a Pre-Fortification Unit 141 or a pre-fortification interface, which enables the owner or operator of the ML / DL / AI Engine 101 to configure and define its requirements from (or operational constraints of) the output model and from the fortification process; such as, prediction running time, prediction computational cost, total memory allocated for output model, fortification process access type to original model (e.g., "black box" or "white box" or other), fortification process duration, fortification process price / computational costs / resources costs, type of modification to original model that is allowed (e.g. allow or disallow re-training; only allow to add pre-processing, do not change original model but add an attack detection layer). Optionally, a Smart Fortification Unit 143 performs an algorithm for finding Pareto optimal solutions of the constrained optimization problem. In some embodiments, optionally, the evaluation of each model proposal may include performing of at least one penetration test attempt. The selection process may use one or more of the following techniques or considerations: Using multi-objective optimization algorithms; Using limited Budget search algorithms for bounded time fortification process; Using AI-Based Pen-Testing for fast Pen-Testing Approximation; Using Covering Algorithms for finding optimal subset of defenses that covers all relevant attacks; Grid Search algorithms; using Evolutionary / Genetic algorithms. Optionally, a Post-Fortification Unit 142 or a post-fortification interface may allow browsing and inspecting the different fortification results, for choosing the best particular fortification solution to suit the requirements and constraints, optionally including an efficient mechanism to explore pareto-optimal options.

Optionally, an AI-based Model Fortification Unit 144 may perform AI-Based Prediction of the most suitable or efficient fortification policy, or may determine the efficient or suitable subset of available and relevant defenses and their corresponding efficient defense parameter values. For example, the AI-based Model Fortification Unit 144 may collect historical data or past data about Models, customer requirements and constraints, and their corresponding fortification results. Then, the AI-based Model Fortification Unit 144 constructs a dataset of: (I) model features, such as, type, size, architecture features (e.g., layer sizes and types); and (II) the requirements or constraints as defined by the owner or operator of the particular ML / DL / AI Engine 101 that is being evaluated or protected; and (III) results of fortification methods and their corresponding fortification parameter values. A suitable AI technique, such as Deep Neural Network or Random Forest, may be used to predict or to determine the suitable or efficient subset of fortification techniques, and their respective parameters, that are predicted or determined to provide the best or most efficient fortification to the particular ML / DL / AI Engine 101 that is being evaluated or protected, while maintaining the defined constraints and while achieving the defined requirements, and without actually performing the time-consuming and computational resources consuming fortification process over many iterations on the particular ML / DL / AI Engine 101 that is being evaluated or protected.

Some embodiments may include a Region of Interest (RoI) based Protection Unit 150, for providing protection and/or fortification to the particular ML / DL / AI Engine 101 that is being evaluated or protected. For example, some conventional (e.g., non-AI-based) algorithms for image processing tasks may be more robust to adversarial attacks, while on the other hand may also be less accurate. For example, the task of detecting what is the Region of Interest (RoI) in a given image is a task that was investigated and has various non-AI algorithms that address it. Some embodiments may include defense techniques that combine both classical algorithms (e.g., RoI detection algorithms) with an AI-based protection unit, to achieve both robustness and accuracy in protecting the ML / DL / AI Engine 101.

Accordingly, a Gradient / RoI Adversarial Input Detector Unit 151 may be used. When classifying an image using a ML model, and in particular using Deep Neural Network (DNN), the system may derive the gradient of the model at the input; for example, the gradient is a matrix with the same shape as the input image. The values in the gradient are (or indicate, or correspond to) the level of importance of the pixels in the classification process of the specific input image. For example, if a DNN correctly classifies a cat image, then the gradient would show that the important pixels in the classification process were those of the nose, ears, and eyes of the cat.

Therefore, an input image may be determined to be an adversarial image, by: (a) Calculating the input image's gradient according the ML model; (b) generating the region of interest (ROI) of the image using a classical algorithm or a deterministic algorithm or a non-ML algorithm; (c) comparing the gradient and the ROI; if they are consistent with each other or match each other, then approving the image as a legitimate input image or as non-adversarial input image; if they are inconsistent or contradicting to each other or non-matching, then reject or flag the input image as adversarial input image. The comparison or the matching process may be performed, for example, using a trained ML algorithm that is dedicated for this specific comparison task; and/or by using a deterministic algorithm that verifies that a pre-defined threshold value (e.g., at least 70 percent, or at least N percent) of the important pixels is indeed inside the ROI.

In some embodiments, a ROI Pre-Processing Unit 152 may be used to perform pre-processing operations for a given input image for the above task; for example, by: (a) detect or determining the ROI; and (b) replacing all pixels in that input image, that are located outside of (or externally to) the ROI, with one of the following: (i) a constant value (e.g., zero); (ii) values corresponding to smoothing or strong smoothing of the original image pixels; (iii) random or pseudo-random values; (iv) a combination of the above values.

Some embodiments may comprise an Adaptive Fortification Unit 155, or a Hybrid Online and Offline Protection Unit 156, which may operate to further protect the ML / DL / AI Engine 101 against attacks or adversarial inputs or attacks or malicious inputs. The model fortification is a multi-objective constrained optimization task. The task includes finding a model that is concurrently optimal in accuracy and parameters and also in its robustness to different threats, while being constrained by user requirements of prediction running time, prediction CPU usage and memory usage, or other constraints. In addition to solving the optimization problem in a static setting, solving the optimization problem in a dynamic setting may be beneficial. For example, CPU / processing costs, memory utilization costs, database utilization costs, and/or other costs of resources utilization, may change dynamically over time; and similarly, the query load on the ML / DL / AI Engine 101 may change over time; and the probability of the different threats may change over time (e.g., on a particular day, it may be known that ML / DL / AI Engines in a region or worldwide are being attacked by a particular adversary, or due to a particular vulnerability or malware that is currently spreading and operational). The system may thus utilize an algorithm that dynamically adjusts or modifies or re-configures the model itself, namely the ML / DL / AI Engine 101 itself and its internal model, in a dynamic or online manner (e.g., once per day; twice per week; or even once per hour, or at other time intervals) according to the changing requirements and changing values of the above-mentioned parameters. For example, the fortification process of the ML / DL / AI Engine 101 may be scheduled to be executed every H hours, or every D days; and/or an AI-based algorithm and online optimization algorithm may be utilized to provide additional response to a dynamic environment of changing threats and/or changing parameter values.

Some embodiments may utilize an Online Defense and Protection Unit 157, which may perform ML / DL / AI Engine 101 protection operations in real-time or near-real time. Such service may be web-based, or may include a locally-installed software component and/or hardware component, optionally, supporting an Application Programming Interface (API) for improved configuration and utilization. Such operations may include, for example: (A) Online input preprocessing, in which the protected ML / DL / AI Engine 101 firstly sends an input item (e.g., an input image) to the Online Defense and Protection Unit 157, and then receives back from it a "sanitized" input or a "corrected" input (e.g., by applying one or more modifications to the input that may cancel or alleviate or reduce the negative effects of the adversarial manipulations that were done to it), or an approved input (e.g., the input image is returned, with an indication that it is legitimate or non-adversarial or non-malicious), or receives back an indication that the input item is malicious or adversarial and should be discarded or should not be processed by the protected ML / DL / AI Engine 101; and the input that is received from the Online Defense and Protection Unit 157 is then passed to the protected ML / DL / AI Engine 101 for further processing (if approved). In a demonstrative example, a protected ML / DL / AI Engine operates to classify images of humans as either male or female; and the Online Defense and Protection Unit 157 adds a pre-processing filter or analysis or check, whether the input image is (at all) human or non-human (e.g., dog, chair), to thus protect the protected ML / DL / AI engine from such input signals that are possibly attack-related and/or that may cause the ML / DL / AI engine to fail or to output incorrect results. (B) Online adversarial input identification; the protected ML / DL / AI Engine 101 sends the input item (e.g., input image) to the Online Defense and Protection Unit 157, and receives back a classification indicating whether the input item is adversarial or non-adversarial; (C) Online attack pattern detection, in which the protected ML / DL / AI Engine 101 (or a monitoring component associated therewith) sends all or substantially all or most of some of the inputs that are received at the protected ML / DL / AI Engine 101, to the Online Defense and Protection Unit 157, which in turn analyzes the series of inputs and identifies an attack pattern (e.g., identifying a series of Cat images that are pre-labeled as Dogs); and when an attack pattern is detected (e.g., by detecting an attack pattern which is a series of inputs (or images) that are very similar to each other yet they differ only in several bits or bytes (or pixels); or a series of images that seem to be a result of a search / optimization process), the Online Defense and Protection Unit 157 may notify the owner or operator of the protected ML / DL / AI Engine 101 that such attack was detected, and/or may generate a trigger to block or quarantine or discard or to avoid processing of certain queries or inputs from a particular source or that have a common characteristic. (D) Online Monitoring of attacks, and generating relevant model(s) or graphs or charts representing detected attacks and ML security related Key Performance Indicators (KPIs). (E) Online time delays, in which the protected ML / DL / AI Engine 101 firstly sends to the Online Defense and Protection Unit 157 an input item along with an identifier of the input's source; and the Online Defense and Protection Unit 157 injects or intentionally adds a time-delay (e.g., of T seconds or T minutes; wherein T is a pre-defined number; or wherein T is selected randomly or pseudo-randomly within a pre-defined range of values) before returning the input to the protected ML / DL / AI Engine 101 for processing; or wherein T is selected based on Pen-Testing of ML / DL / AI Engine 101, or based on outputs generated by the Smart Fortification Unit 143; the time delay may be dependent on the input source and/or on the input item itself; the time delay may block or weaken or slow-down or de-incentivize certain attacks, such as a Stealing Attack, that require numerous queries to the protected ML / DL / AI Engine 101. (F) Query Quota or Rate Limiting, in which the protected ML / DL / AI Engine 101 firstly sends to the Online Defense and Protection Unit 157 the input item along with an identifier of the input's source, and the Online Defense and Protection Unit 157 determines whether or not to block that particular source according to a query quota that is associated with that particular source; the quota may be pre-defined, or may be dynamically allocated and/or configured, based on one or more parameters or conditions, such as, taking into account a level of similarity among multiple inputs / multiple queries that have arrive within the past T minutes from the same source, and/or other parameters (e.g., outputs or values generated by the Smart Fortification Unit 143). (G) a Blacklisting process, in which the protected ML / DL / AI Engine 101 firstly sends to the Online Defense and Protection Unit 157 an input along with an identifier of the input's source; and the Online Defense and Protection Unit 157 then decides whether or not to block that source according to a blacklist of sources and/or a blacklist of particular inputs or queries.

In some embodiments, the Online Defense and Protection Unit 157 may thus allow protection that does not require modification of the original ML Model; may allow efficient integration and utilization of complex protection techniques, with minimal or no changes to the protected ML / DL / AI Engine 101 itself; may allow a behavioral defense method which detects an attack pattern across (or from) a series of inputs or a series of queries; may allow applying and using confidential defense methods that are provided by a remote server of the Online Defense and Protection Unit 157 as a "black box" solution that provides to the protected ML / DL / AI Engine 101 an output (e.g., "input is legitimate" or "input is adversarial") without exposing the method(s) that such remote "black box" unit employs to reach such determination; and may allow separation between the ML / DL / AI Engine 101 (and its original model) and the unit that provides the protection layer to it. In some embodiments, the online defense that is provided by the system may allow each of both parties to keep their confidential information secret: the protected ML / DL / AI Engine 101 itself and its internal methods of operations may be kept undisclosed while being protected against attacks, and/or the protection service (which protects the ML / DL / AI Engine 101) may be provided as a web-based or remote or locally-installed or co-located or cloud-based "black box" protection service which does not disclose or reveal its internal methods of operation.

Some embodiments may further utilize an Online AI-Based Defense Unit 158, which may utilize one or more (e.g., remote, cloud-based) AI / ML / DL engines (e.g., using DNN, Random Forest, Evolutionary / Genetic algorithms, or other techniques) to select which protection scheme or protection operations to apply (or not to apply) to the protected ML / DL / AI Engine 101 and/or with regard to a particular input (or set of inputs) that is incoming to the protected ML / DL / AI Engine 101; as well as which pre-processing operations or pre-classification operations to apply or to perform on such input(s), which re-trained model(s) to apply, which detection algorithms to apply, and/or other operations which may be selectively determined as applicable or suitable, or which may be selected from a pool of pre-defined attack mitigation operations based on such AI / ML / DL output of the Online AI-Based Defense Unit 158. In some embodiments, the Online AI-Based Defense Unit 158 functionality may assist in achieving the dynamic fortification that allows the system to address dynamic requirements. For example, a database or a dataset may be created, with characteristics of various types of ML / DL / AI engines, with characteristics of their particular dataset and model, with characteristics of known attacks that were detected towards them, with the mitigation / protection operations that are relevant for each type of engine and dataset and attack, and for the results (success / failure; or a success score as a percentage value) for a particular mitigation / protection operation with result to a particular attack towards a particular engine or dataset or or engine-and-dataset combination. Such data may be subject to ML / DL / AI analysis or classification, in order to estimate or predict or deduce which attack vectors may be relevant towards a particular (e.g., new) protected ML / DL / AI engine, and/or which mitigation or protection techniques may be useful or effective towards such attack(s) against such protected ML / DL / AI engine. In some embodiments, a Dataset Integrity Analysis Unit may operate as part of the system or platform, to estimate and/or to quantify the level of integrity of the dataset that is currently utilized by the ML / DL / AI engine and/or by its model and/or that was used to train such engine and/or that was used to construct such model; and one or more mitigation operations or re-training operations or adversarial training operations, or dataset pruning or replacing or augmenting operations, may be invoked by the system in response to a Dataset Integrity score that is below a pre-defined threshold value.

The Online AI-Based Defense Unit 158 may be responsible for selecting an appropriate (or, the most appropriate) online defense per each particular input that is incoming towards (or into, or that is about to enter) the protected ML / DL / AI Engine 101. The Online AI-Based Defense Unit 158 may be implemented (or may operate) based on dynamic fortification history and/or based on outputs of the Smart Fortification Unit 143, and/or based on outputs of the AI-based Model Fortification Unit 144 that combines ever-improving model(s) based on experience or insights from the fortification history.

The system may further include an Online Defenses Monitoring Unit 159, which generates an on-screen display or notifications or a dashboard that enables a user (e.g., an owner or operator of the protected ML / DL / AI Engine 101) to monitor the attacks that were attempted or are ongoing towards his ML / DL / AI Engine 101, as well as the protection mechanisms that are or were applied and their results. The Online Defenses Monitoring Unit 159 may enable the user, for example: to obtain a graph or chart or list or other representation of the history of attacks that were detected and/or blocked and/or evaded, and the success rate of such attacks and/or of the mitigation operations that were applied; to manually label particular usage statistics, and/or to configure particular parameters and constraints that are utilized by the system; to obtain data about CPU / Memory usage and running time usage per each online defense mechanism; to obtain defense effectiveness statistics and defense success data, such as, the percentage of inputs that were identified as adversarial (out of all inputs), and the percentage of adversarial inputs that were successfully blocked in time or that were subject to pre-processing operations or quarantine or discarded; information or generated insights about pen-testing history of the protected ML / DL / AI Engine 101 (e.g., particularly when a protection attribute or a protection-related characteristic is changed dynamically); and/or other relevant parameters.

The system may further comprise an Attack Investigation Console Unit 160, which enables an attacks investigator and/or the operator of the ML / DL / AI Engine 101 to perform investigation operations regarding one or more attacks that were performed against the ML / DL / AI Engine 101, thereby providing or generating additional important information or insights regarding the required or suitable reactions or mitigation operations. The Attack Investigation Console Unit 160 may generate and provide, for example: data about distribution of the adversarial label, for example, for evasion attacks in which the attacker attempts to trick the model into classifying some input incorrectly, indicating the distribution of the classification that the attacker tried to achieve (e.g., indicating that the attacker has attempted to attack classification of Animal images, and not of Vehicle images); data about distribution of the type of attack (e.g., model stealing, dataset information stealing, poisoning exploitation, evasion, or other attacks); data indicating whether the attack was a "black box" attack or a "white box" attack, wherein detection of a "white box" attack may lead the system to generate a warning that the Model itself is estimated to have been stolen; data indicating whether the attack is a known attack (e.g., an attack that utilizes one or more open-source tools or previously-seen attack tools), or is an unknown attack (e.g., an attack that utilizes a never-before-seen attack tool or attack vector or attack surface or attack technique), which in turn may also generate an indication regarding the level of threat or risk associated with the attack; and/or other insights. The Attack Investigation Console Unit 160 may further enable to efficiently send or route or re-route suspicious inputs to manual re-labeling or re-classification, to generate insights about the true or the full extent or scope of the attack, to initiate sandboxing operations or quarantine operations with regard to particular components and/or data-portions and/or dataset(s) and/or engine(s), to enable visualizing and/or initiation of sandboxing of one or more features or functionalities, to generate a visual or an on-screen representation of two or more protection techniques or fortification techniques that operate together or in parallel or in series, to generate a visual or an on-screen representation of pen-testing results, to generate a dashboard representing or showing currently deployed and/or currently available and/or currently unavailable protection techniques and/or fortification techniques, to generate visual or on-screen representations that depict fortification or protection of particular ML / DL / AI unit(s) within a compound ML / DL / AI system or engine, and/or to perform or to trigger other mitigation operations (e.g., enabling the investigator to manually quarantine a set of inputs, or inputs that are received from a particular source, or inputs that share a particular characteristic).

The Applicants have realized that in some situations, an owner or operator of the ML / DL / AI Engine 101 may wish to determine the robustness of his ML / DL / AI Engine 101, without sharing information about the ML / DL / AI Engine 101 or its internal model(s) or component(s) or logic. However, realized the Applicants, some types of attacks may be a "white box" type of attack, in which partial knowledge or full knowledge of the attacked ML / DL / AI Engine 101 is already in the hands of the attacker. The Applicants have realized that in some situations, a "white box" attack may require from the attacker to know only the result of a specific computation (for example: the gradient of the model for a certain input) in order to carry out the attack. Accordingly, an Undisclosed Model Pen-Testing Unit 162 may perform pen-testing of a "white box" attack against the ML / DL / AI Engine 101, while maintaining confidentiality of the model or components of the protected ML / DL / AI Engine 101. For example, a server or a computer that hosts the ML / DL / AI Engine 101, or that is operably associated with the ML / DL / AI Engine 101, may be configured by installing thereon a testing module (e.g., optionally implemented as an open source module, or as a module having source code that can be inspected by the owner of the ML / DL / AI Engine 101 or by a trusted auditor), and the installed testing module only performs the required computation for the "white box" attack (e.g., calculates the gradient of the model for a certain input). The system performs a pen-test which carries out the "white box" attack by sending a request to the testing module to perform the computation and then send its result(s) back to the Undisclosed Model Pen-Testing Unit 162 (e.g., implemented as a remote pen-testing server) for further evaluation or analysis there.

Additionally, the system may provide protection from attacks even if there is no information about the ML / DL / AI Engine 101 or its model; for example, by selectively activating only remote or cloud-based non-intrusive protection unit(s), such as units that detect malicious or suspicious inputs or queries regardless of the manner in which the ML / DL / AI Engine 101 operates. Optionally, the system may perform a search on the defense options that are available, and for each option may evaluate the robustness of the protected ML / DL / AI Engine 101 using the Undisclosed Model Pen-Testing Unit 162, or using techniques that test for robustness against conventional "black box" attacks, or using other techniques.

Some embodiments may utilize one or more Pen Testing units or modules, such as one or more of units 121 or 128 or 162 described above, for evaluating the robustness of the ML / DL / AI Engine 101. The evaluation may be performed using empirical methods or deterministic methods; for example, performing a particular attack against the ML / DL / AI Engine 101, and analyzing the results of the attack; and/or by using other methods, for example, mathematical analysis or computational analysis of the structure of the ML / DL / AI Engine 101 if such structure is partially known or is fully known to the pen-testing unit. The Pen-Testing unit may be a modular tool which may be efficiently updated to enable testing of new attacks and new theoretical or computational evaluation methods.

Some embodiments may optionally utilize or provide Intrusive Defenses to the ML / DL / AI Engine 101; for example, using Secure Pre-Trained Models, Adversarial Training, Architecture Modification, Ensembles Training, Model Re-Training, Dataset Pre-processing, Dataset Augmentation, Dataset Sanitation or Sanitization, and/or other techniques.

For example, and Adversarial Training Unit 163 may operate to increase the robustness of the protected ML / DL / AI Engine 101, by applying an adversarial training defense against one or more known attacks; optionally utilizing a component or module that is installed locally on or at the server the runs the ML / DL / AI Engine 101, or as a component that is operably associated therewith. Optionally, pre-processing based adversarial training and/or post-processing based adversarial training may be used, including adversarial training with regard to ML / DL / AI Engine 101 that is considered an undisclosed model. Optionally, some embodiments may use adversarial training of a pre-processing element added to the ML / DL / AI Engine 101, and/or adversarial training of a post-processing element added to the ML / DL / AI Engine 101, including adversarial training with regard to ML / DL / AI Engine 101 that is considered an undisclosed model.

In some embodiments, adversarial training may be applied in other ways; for example, a Neural Architecture Search (NAS) technique may be used, such that the neural architecture or model that is utilized by the protected ML / DL / AI Engine, or one or more characteristic or properties of the neural architecture or model, is or are part of a hyper-parameter search space; and a NAS unit predicts or estimates the optimal architecture or model for a given task; and optionally, the preferred or the optimal model or architecture is then trained with an adversarial training protocol to achieve hardening or robustness against adversarial attacks.

Optionally, one or more Non-Intrusive Defense Unit(s) 164 may be used by the system; for example, performing pre-processing and/or post-processing, evasive input classification, evasion classification defenses, and/or other non-intrusive defenses that do not require partial or full re-training of the original model. The incorporation of such defenses may be done in a modular way, so that new defenses that are developed may be efficiently added to the system.

In some embodiments, a Poisoning Detection and Repair Unit 165 may operate to detect and repair models and/or datasets that were subject to a poisoning attack. This unit may operate under one or more user-defined constraints; for example, a constraint that re-training is now authorized, or an undisclosed dataset, or an undisclosed model. The unit may be constructed in a modular way to efficiently add or utilize new detection methods and/or new repair methods.

Some embodiments may provide Real-Time Defense as a Real-Time Service to the ML / DL / AI Engine 101 which runs on its regular (e.g., "production") server and environment. Such defense may include, for example, real-time pre-processing, real-time post-processing, real-time adversarial input classifier, real-time pre-processing of ensembles, real-time backdoor poisoning mitigation, real-time backdoor poisoning exploitation detection, and/or other services that may be dynamically provided as a cloud-computing based service or as a remote service.

Some embodiments may utilize a Real-Time Model Access Restriction Unit 166, to enable protection of the ML / DL / AI Engine 101 which runs in "production", by selectively restricting or limiting access to the ML / DL / AI Engine 101; for example, by introducing or injecting or intentionally adding response time delays and/or user query quota and/or rate limiting, which may be effective against some "black box" evasion attacks, "black box" reprogramming attacks, stealing attacks, and/or other attacks. The unit may also assist in blocking various attacks by using and enforcing a user-defined or user-configurable blacklist. Optionally, restrictions parameters may be dynamically selected and enforced based on pen-testing of the model or the ML / DL / AI Engine 101.

The system may thus provide real-time attack detection, attack blocking, attack mitigation, and attack monitoring. For example, the system monitors and inspects inputs that are incoming to the ML / DL / AI Engine 101 and/or outputs generated by the ML / DL / AI Engine 101, while the ML / DL / AI Engine 101 runs and operates ("in production"), and analyzes such inputs and outputs to detect an attack and to mitigate it. Once an attack is detected and identified, the system triggers real-time or near-real-time query blocking, real-time or near-real-time user blocking, sends relevant attack information to a monitoring system, and generates and sends a notification to an administrator or to one or more recipients; as well as performing other mitigation operations (e.g., rate limiting; query quota configuration and enforcement; time delay injections; quarantine or discarding of inputs or of queries; sanitizing of inputs or queries; intentional modification or randomization of outputs (e.g., to counterattack or to confuse an attacker); taking one or more components of the ML / DL / AI Engine 101 offline; or other mitigation operations).

Some embodiments may utilize a Protection Policy Configuration Unit 167 or similar design and configuration tool, which enables a user to configure, modify and optimize multiple dependent and independent parameters, such as model accuracy on natural inputs, model accuracy under each type of attack, computational resources for model prediction, and/or other parameters or constraints, in order to increase robustness of the ML / DL / AI Engine 101 against attacks or threats. The Protection Policy Configuration Unit 167 enables the user to explicitly consider, select, approve and/or disapprove various parameter trade-offs, and to choose or define or configure a protection scheme that best fits the user's requirements, goals, and constraints.

It is clarified that the ML / DL / AI Engine 101, which is protected by some embodiments, need not necessarily be a single unit or a stand-alone unit or a single-component unit; rather, some embodiments may similarly protect a chain or set or group or batch or "computing farm" other collection of two or more (or numerous) ML / DL / AI Engines or units, that may be operably associated with each other, or which may operate in parallel and/or in series and/or concurrently and/or simultaneously and/or sequentially, or a multiple-component ML / DL / AI Engine or sub-system, or a multiple-model ML / DL / AI Engine or sub-system, or an ML / DL / AI Engine which includes a combination or a composition of multiple units or components. It is emphasized that in accordance with some embodiments, the protection system may serve and protect, simultaneously or concurrently or in parallel, multiple different customers or multiple different independent ML / DL / AI Engines, which may be entirely independent of each other, and/or which may be remote from each other, and/or which may be owned or operated by different entities, and/or which may be of different types.

For demonstrative purposes, some portions of the discussion may relate to a protected ML / DL / AI Engine which receives as input an image or a photo or a graphical data-item; however, these are only non-limiting examples, and some embodiments may similarly protect other types of ML / DL / AI Engines and/or may protect ML / DL / AI Engines that receive (or that process, or that operate on) other types of data, for example, textual data, numeric data, alpha-numeric data, tabular data or tabulated data, array or matrix or table of data-items or values, data arranged or formatted as fields or records, non-graphical data, graphical data, video data, audio data, audio-and-video data, raw data, processed data, partially-processed data, user-provided data, machine-generated data, data collected or received from sensors or sensing units (e.g., accelerometer data, gyroscope data, temperature data, spatial orientation data), biometric data (e.g., fingerprint scan, retina scan, eye scan, face scan or facial image), financial data, finance-related data, data that is intended for OCR, data obtained from (or provided as) a text file or a spreadsheet file or an XML file or a CSV file or a database file, inputs that are a combination of two or more types of data, inputs that are provided as a combination of two or more data formats, data items that are accompanied by meta-data (e.g., indicating how or where or when the data was collected or obtained), and/or other types of data.

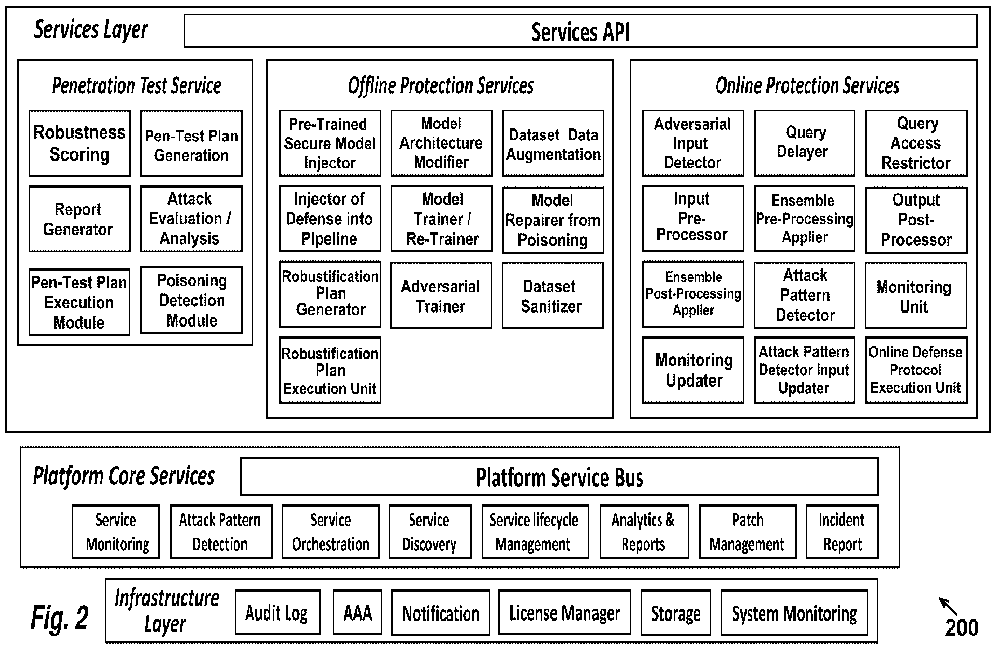

Reference is made to Fig. 2, which is a schematic block-diagram illustration of a system 200, in accordance with some demonstrative embodiments. Optionally, system 200 may be a demonstrative architecture implementation of system 100 of Fig. 1. System 200 utilizes a modular architecture which allows scalability, and may be implemented as a cloud service or as a cloud-computing service, for a single user or for multiple users; or it may be implemented and installed locally (e.g., as licensed software or module that is co-located with the protected ML / DL / AI Engine). The architecture and components of system 200 may support several features of the protection scheme: (a) Penetration testing, via evaluation of the robustness of the protected ML / DL / AI Engine against various threats or attacks; (b) Offline Protection, by modifying or re-configuring the protected ML / DL / AI Engine to become more secure or more resilient against attacks; (c) Online Protection, by providing defensive services for the protected ML / DL / AI Engine in real-time or near-real-time; (d) Attack mitigation services; (e) Protection Sandbox Environment that enables manual / customized experimentation by the user in order to investigate or test or research particular vulnerabilities and protection schemes.

In some embodiments, a Hybrid approach may be used, such as by using Hybrid Adversarial Training; such that, for example, one or more tasks or operations of the protection service are performed at a cloud-based platform or at a remote server that is located remotely from (and is separate from) the protected ML / DL / AI Engine, and one or more other tasks or operations of the protection service are performed on the client side or at the protected ML / DL / AI Engine; for example, the cloud-based platform generates adversarial samples and provides them to the protected ML / DL / AI Engine, and the protected ML / DL / AI Engine performs the training based on the dataset that now includes those adversarial samples. Other hybrid or distributed implementations may be used.

Some embodiments may optionally utilize a cascade of multiple detectors or protection units, or a Detectors Cascade sub-system; for example, by implementing a set or series or line or group of detectors, and by applying only one or only some (and not all) of those detectors with regard to any input signal (e.g., that is directed to the protected ML / DL / AI Engine); and such that output(s) generated by the detector(s) that were already activated, dictate whether (i) a decision has been adequately reached with regard to a particular input signal, or (ii) one or more additional detectors should be invoked for that particular input signal and then their output is analyzed similarly (e.g., whether a decision can be reached, or whether additional detector/s should be invoked). In some embodiments, a faster detector or a less resource-demanding detector, is placed before slower detectors or more resource-demanding detectors, in the Detectors Cascade, in order to allow the system to firstly attempt to reach a decision based on faster and less resource-demanding detection or decision processes, before invoking slower or more resource-demanding detection or decision processes.

In some embodiments, the protection platform or the protection system may include or may provide a "sandbox" experimentation tool or feature, which enables the user (e.g., the owner or administrator of the protected ML / DL / AI Engine) to experiment and explore and evaluate different protection methods or different protection schemes or different protection configurations, and/or different vulnerabilities or attacks, in a controlled or "sand-boxed" environment which does not cause actual damage to the protected ML / DL / AI Engine. For example, the protected ML / DL / AI Engine may be duplicated into a temporary copy, such that it can be tested or experimented upon in a temporary manner and without affecting the "real" protected ML / DL / AI Engine which remains untouched.

In some embodiments, one or more features or functionalities of the platform may be accessible and/or programmable via an Application Programming Interface (API) and/or via a Software Development Kit (SDK) or a "dev-kit", which may enable the user (e.g., the owner or administrator of a protected ML / DL / AI Engine) to interact with the platform and/or to create scripts and/or code portions that automate one or more interactions with the platform and/or that automatically provide commands to the protection platform and/or that automatically apply one or more pre-programmed rules to output (or to alerts) generated by the protection platform.

In some embodiments, a "cloud-based" implementation of the protection platform, or of some (and not necessarily all) of its functionalities, may be implemented using a remote cloud-based computer and/or by utilizing "on-prem" or "on-premise" deployment in which some (or all) of the functionalities are deployed locally at the premises of the user (the owner or administrator of the protected ML / DL / AI Engine, at private infrastructure of such user and/or at a private cloud-based deployment or via other suitable type(s) of Software as a Service (SaaS) deployment.

In some embodiments, a plurality of Protection Policies (or Defense Policies) may be pre-defined in the system, and/or may be configured or defined or modified from time to time by the user (e.g., the owner or the administrator of a protected ML / DL / AI Engine); and one or more rules may further be defined to enable the protection system to automatically switch from a first Protection Policy to a second, different, Protection Policy, if one or more pre-defined conditions hold true, and/or if a triggering event occurs or is detected, and/or if the value of one or more particular parameters is beyond a pre-defined threshold value, and/or based on other types of conditions or triggers. For example, a Protection Policy or a Defense Policy may reflect several considerations or goals or constraints that may be configured by the user (e.g., the owner or the administrator of a protected ML / DL / AI Engine); for example, (i) the target accuracy or the target validity or the target correctness of the output generated by the protected ML / DL / AI Engine, (ii) the target level of protection that is desired or intended to be achieved, (iii) resource related constraints (e.g., processing cycles, processing time, time-to-decision, memory resources, storage resources), (iv) constraints or goals that may be related to other business-related or technology-related features (e.g., ability to audit or explain performance-related decisions of operations), (v) cost or budget constraints. Accordingly, the user (e.g., the owner or the administrator of a protected ML / DL / AI Engine) may modularly define a Defense Strategy or a Protection Strategy, reflected in such Protection Policy or Defense Policy, that takes into account and that reflects said goals and/or other goals or constraints. The protection platform may then advise the user which Protection Suite(s), or which particular features or functionalities of the protection platform, may be suitable or may be available to achieve such goals and/or to comply with such constraints; and in some embodiments, the protection platform may even select automatically and autonomously to switch from a first set of protection operations (e.g., a first Protection Suite) to a second, different, set of protection operations (e.g., a second Protection Suite), and/or to modify values of one or more parameters or constraints.

For example, the user may define goals such as, (i) not more than 8 percent of inputs should be blocked or should be regarded as malicious, and (ii) up to 6 gigabyte of RAM may be allocated for input analysis and attack detection, and (iii) up to 450 clock-cycles of two processing cores may be allocated for input analysis and attack detection; and at a certain time-point, once the invocation of a particular Protection Suite reaches those constraints, the Protection Suite (or the operational parameters that it utilizes) may be automatically adapted or modified by the Protection Platform in order to remain within the goals or the constraints as defined in the Protection Policy.

Accordingly, some embodiments may utilize a dynamic or a dynamically-changing or a dynamically-changeable Protection Policy, as well as dynamic or dynamically-changing or dynamically-changeable or dynamically-switchable Protection Suites. The dynamic properties are important since, for example, monetary costs of computing resources may dynamically change, and/or because a new vulnerability may cause a sudden spike in a certain type of attacks, and/or because a particular event (e.g., a war between two nations, or a business conflict between two corporations) may cause a spike in attacks against a particular ML / DL / AI Engine. The system may thus provide a dynamically-changing or dynamically-adjusting aggregation of protection functionalities, that takes into account (and complies with) said constraints and said goals; and this may be implemented at the online or cloud-based platform and/or at the on-premises deployed unit(s) and/or at the Attack Mitigation Unit 124 and/or at other suitable units of the system.

In some embodiments, the system may perform dynamic or periodical optimization or modification or adjustment (or switching) of defense policies, and/or of the defense techniques or protection functionalities that are applied to enforce or to achieve a particular defense policy or protection policy or its goals or its constraints, based on one or more rules or parameters or conditions or analysis; for example, by considering and analyzing a history of performance of defense / protection optimizations and/or modifications; by extracting features from the particular use case (e.g., the characteristics of the particular ML / DL / AI being protected, system type, dataset type, dataset size, overall dataset features, dataset features that are generated using an auto-encoder, model type), and may train an AI-based system (e.g., Deep Neural Network (DNN), Graph Neural Network (GNN), clustering method, Nearest Neighbor method, combination of such or other methods) to predict or to estimate an effective defense suite and/or the effective combination or aggregation of protection functionalities that would reach the goals (or, the highest number of goals) from the goals that are defined by the Protection Policy, while also complying with the system utilization constraints (e.g., operational constraints, processing resources constraints, memory constraints, time constraints, false-positive threshold constraint, false-negative threshold constraint) or with the highest number of such constraints. In some embodiments, optionally, a first Differential Weight Formula may be used with regard to the various Goals that are defined in the Protection Policy, since a particular goal (e.g., to block 98 percent of attacks) may be assigned a greater weight relative to another particular goal (e.g., to have not more than 7 percent of false positive errors); and similarly, optionally, a second Differential Weight Formula may be used with regard to the various Constraints that are defined in the Protection Policy or by the system administrator (e.g., the owner or administrator of the protected ML / DL / AI engine), since a particular Constraint (e.g., to use not more than 5 gigabytes of RAM) may be assigned a greater weight or a greater rigidity relative to another particular constraint (e.g., to finish all computations with regard to any input signal within 6 seconds of receipt of the input signal). The output of the weighted formula may be used as a consideration in the dynamic optimization or modification (or switching) of the Protection Policy and/or of the protection functionalities that are applied.

The present invention provides a system comprising: one or more processors that are configured to execute code, wherein the one or more processors are operably associated with one or more memory units that are configured to store code. The system is configured to protect a Protected Engine that is a unit selected from the group consisting of: a Machine Learning (ML) unit, a Deep Learning (DL) unit, an Artificial Intelligence (AI) unit, a Neural Network (NN) unit. The system is configured to protect the Protected Engine against malicious inputs and malicious queries and malicious training data and malicious attacks. The system comprises at least one of (or, in some implementations, both of): (a) an Offline Protection Unit, to analyze one or more characteristics of the Protected Engine, and to perform offline fortification of said Protected Engine against attacks by changing one or more operational properties or operational parameters of the Protected Engine and to reduce its vulnerability to attacks; (b) an Online Protection Unit, to perform analysis of at least one of: (i) one or more inputs that are directed to be inputs of the Protected Engine, (ii) one or more outputs that are generated by the Protected Engine; and based on said analysis, to dynamically perform online fortification of said Protected Engine against attacks by dynamically changing one or more operational properties or operational parameters of the Protected Engine and to reduce its vulnerability to attacks.

In some embodiments, the Protected Engine utilizes a Protected Model that is selected from the group consisting of: a ML model, a DL model, an AI model; wherein at least one of the Offline Protection Unit and the Online Protection Unit, automatically modifies said Protected Model, from a pre-modification model version that is vulnerable to a particular attack, to a post-modification model version that is not vulnerable at all or that is less vulnerable to said particular attack.

In some embodiments, the Protected Engine operates based on a Protected Dataset; wherein at least one of the Offline Protection Unit and the Online Protection Unit, automatically modifies said Protected Dataset, from a pre-modification dataset version that causes the Protected Engine to be vulnerable to a particular attack, to a post-modification dataset version that causes the Protected Engine to be not vulnerable at all or less vulnerable to said particular attack.

In some embodiments, the Protected Engine operates based on a Protected Dataset; wherein at least one of the Offline Protection Unit and the Online Protection Unit, automatically modifies said Protected Dataset, from a pre-modification dataset version that causes the Protected Engine to be vulnerable to a particular attack, to a post-modification dataset version that causes the Protected Engine to be not vulnerable at all or less vulnerable to said particular attack; by generating and adding Adversarial Data to said Protected Dataset and by initiating re-training of the Protected Engine based on the post-modification dataset version.

In some embodiments, the Protected Engine utilizes a Protected Architecture having a particular number of pipeline operations that utilize particular values of operational parameters; wherein at least one of the Offline Protection Unit and the Online Protection Unit, automatically modifies said Protected Architecture, from a pre-modification architecture version that causes the Protected Engine to be vulnerable to a particular attack, to a post-modification architecture version that causes the Protected Engine to be not vulnerable at all or less vulnerable to said particular attack; by modifying a number or an order of said pipeline operations or by modifying one or more of said particular values of operational parameters.

In some embodiments, the Protected Engine utilizes a Protected Architecture having a particular number of pipeline operations that utilize particular values of operational parameters; wherein at least one of the Offline Protection Unit and the Online Protection Unit, automatically modifies said Protected Architecture, from a pre-modification architecture version that causes the Protected Engine to be vulnerable to a particular attack, to a post-modification architecture version that causes the Protected Engine to be not vulnerable at all or less vulnerable to said particular attack; by adding to said Protected Architecture a pre-processing unit that performs an additional operation on inputs received by the Protected Engine.

In some embodiments, the Protected Engine utilizes a Protected Architecture having a particular number of pipeline operations that utilize particular values of operational parameters; wherein at least one of the Offline Protection Unit and the Online Protection Unit, automatically modifies said Protected Architecture, from a pre-modification architecture version that causes the Protected Engine to be vulnerable to a particular attack, to a post-modification architecture version that causes the Protected Engine to be not vulnerable at all or less vulnerable to said particular attack; by adding to said Protected Architecture a post-processing unit that performs an additional operation on outputs generated by the Protected Engine prior to transferring said outputs to an intended recipient.

In some embodiments, the Protected Engine utilizes a Protected Architecture having a particular number of pipeline operations that utilize particular values of operational parameters; wherein at least one of the Offline Protection Unit and the Online Protection Unit, automatically modifies said Protected Architecture, from a pre-modification architecture version that causes the Protected Engine to be vulnerable to a particular attack, to a post-modification architecture version that causes the Protected Engine to be not vulnerable at all or less vulnerable to said particular attack; by adding to a pipeline of the Protected Architecture an attack detector unit that analyses inputs and determines whether a particular input or a particular group of inputs relate to an attack on the Protected Engine.

In some embodiments, the Attack Detector Unit is not necessarily an integral part of the protection array or the offline protection unit or the online protection unit; but rather, it may be an auxiliary unit that detects attacks or that estimates that a particular input (or set of inputs) may be part of an attack or may be malicious or non-legitimate; and may transfer an "attack detected / estimated" signal to other parts of units of the system in order to invoke protection operations and/or mitigation operations.

In some embodiments, one or more of the protection units of the platform or system, such as the Offline Protection Unit, may operate by actively modifying or adjusting an internal structure of the model (or, the digital representation of a model) on which the ML / DL / AI engine runs or operates; and/or by adding pre-processing and/or post-processing operations, filtering operations, sanitizing operations, re-training, adversarial training, and/or other techniques; and may perform operations that cause the ML / DL / AI engine and/or its model to be more resilient towards attacks or less vulnerable or more robust.

In some embodiments, the Protected Engine utilizes a Protected Architecture having a particular number of pipeline operations that utilize particular values of operational parameters; wherein at least one of the Offline Protection Unit and the Online Protection Unit, automatically modifies said Protected Architecture, by performing at least one of: (i) rate-limiting a number of queries that a particular recipient can submit to said Protected Engine, (ii) discarding at least some of incoming queries to said Protected Engine, (iii) quarantining at least some of incoming queries to said Protected Engine; (iv) intentionally delaying outputs, or a particular output, or particular subset of outputs, that are generated by the Protected Engine, prior to their delivery to the relevant or intended recipient(s); (v) alternating among two or more of the above-mentioned operations, or performing from time to time a different operation from the above-mentioned operations.

In some embodiments, the Protected Engine utilizes a Protected Architecture having a particular number of pipeline operations that utilize particular values of operational parameters; wherein at least one of the Offline Protection Unit and the Online Protection Unit, automatically modifies said Protected Architecture, by intentionally delaying responses that are outputted from said Protected Engine towards a particular recipient.

In some embodiments, the Protected Engine utilizes a Protected Architecture having a particular number of pipeline operations that utilize particular values of operational parameters; wherein at least one of the Offline Protection Unit and the Online Protection Unit, automatically modifies said Protected Architecture, by intentionally providing incorrect outputs from said Protected Engine towards a particular recipient that is determined to be an origin of malicious queries.

In some embodiments, at least one of the Offline Protection Unit and the Online Protection Unit, utilizes a Secondary Engine that is selected from the group consisting of: a secondary ML engine, a secondary DL engine, a secondary AI engine, to perform a secondary classification of an input query that is received from a particular originating entity; and based on a classification of said input query performed by the Secondary Engine, to determine whether or not said input query is part of a malicious attack on the Protected Engine.

In some embodiments, the system further comprises an AI-based Pen-Testing Unit (or ML-based or DL-based Pen-Testing Unit), configured to perform, in a controlled manner, automated penetration tests against said Protected Engine; and configured to estimate or to predict (e.g., via ML / DL / AI techniques) a quantitative level of resilience of said Protected Engines against various types of attacks. In some embodiments, every penetration test that is performed against the Protected Engine, adds a new data-sample or data-point that is then utilized by the AI-based (or ML-based or DL-based) Pen-Test Unit to re-train and thus improve the pen-testing prediction model(s). In some embodiments, the AI-based (or ML-based, or DL-based) pen-testing unit may predict or estimate the most effective attacks or attack-types that can be used against the Protected Engine, and/or may predict or estimate the hyper-parameters of such attack or the most effective way that such attack can be carried out against the Protected Engine; and the ML-predicted hyper-parameters of the ML-predicted attack against the Protected Engine may be used by the protection platform in order to invoke or apply or select the relevant or the effective protection operations or mitigation operations (e.g., via ML-based / AI-based / DL-based prediction or selection; or by a deterministic selection process that is based on a set of pre-defined selection rules).

Similarly, the Offline protection unit and/or the Online protection unit may be AI-based or ML-based on DL-based, and therefore they may be continuously (or periodically) re-trained based on the ongoing monitored performance of the Protected Engine and/or the protection platform, thus learning and improving autonomously.

In some embodiments, the system comprises a Defense Policy Constructor Unit, configured to construct a user-configurable Defense Policy that is defined by a plurality of user-configurable operational constraints of the Protected Engine, and configured to dynamically select and invoke and enforce a particular Protection Scheme, from a pool of multiple available Protection Schemes, that protects the Protected Engine against attacks while also complying with the user-configurable operational constraints.

In some embodiments, the system comprises: an Attack Mitigation Unit, configured to select and to activate one or more deterministic and non-A.I.-based mitigation techniques, in response to a determination that the Protected Engine is being attacked.

In some embodiments, the system comprises an Attack Mitigation Unit, configured to select and to activate one or more A.I.-based non-deterministic mitigation techniques, in response to a determination that the Protected Engine is being attacked.

In some embodiments, the system comprises: a Non-Intrusive Defense Unit, configured to perform pre-processing operations and/or post-processing operations that block a detected attack against the Protective Engine, without modifying a model that is utilized by the Protected Engine, and without re-training the Protected Engine on a modified dataset, and without having access to an internal pipeline of operations that is performed by the Protected Engine.

In some embodiments, the Protected Engine is protected against malicious queries and malicious inputs by said system which is a remote, cloud-computing based system that is remote from said Protected Engine and is not co-located with said Protected Engine.

In some embodiments, the system comprises: a Defense Policy Construction Unit, to enable a user to input (i) defense goals for protecting the Protected Engine, and also (ii) operational constraints that the Protected Engine and/or the system should comply with; and a Defense Optimization Unit, that operates based on said defense goals and said operational constraints as provide by said user, and that is configured to dynamically select and apply a particular set of defense techniques to prevent or to mitigate attacks against the Protected Engine.

In some embodiments, the Defense Optimization Unit operates based on AI-based estimation or AI-based prediction of effective defense techniques that should be selected and applied for protecting said Protected Engine, based on AI-based analysis of historic data of protecting a plurality of different AI engines and/or ML engines and/or DL engines.

In some embodiments, the Protected Engine is one protected engine within a combination or a cascade or a pipeline of two or more AI or ML or DL engines; wherein the system performs protection operations to protect at least a portion of said combination or cascade or pipeline.

In some embodiments, the Online Protection Unit is configured to introduce and to invoke a Pre-Processing module that performs defensive pre-processing of input signals that are directed towards said Protected Engine.

In some embodiments, the Online Protection Unit is configured to introduce and to invoke a Post-Processing module that performs defensive post-processing of output signals that are generated and outputted by said Protected Engine prior to their delivery to intended recipients.

The Online Protection Unit is configured to modify an operational architecture of said Protected Engine, from (I) a stand-alone or independent Protected Engine, to (II) a Protected Engine that is part of a multi-engine pipeline or multi-engine cascade structure that is more resilient to attacks relative to the stand-alone or independent Protected Engine.

Some embodiments may include a non-transitory storage medium or storage article having stored thereon instructions or code that, when executed by a machine or a hardware processor, cause such machine or hardware processor to perform a method as described.

Some implementations may utilize an automated method or automated process, or a machine-implemented method or process, or as a semi-automated or partially-automated method or process, or as a set of steps or operations which may be executed or performed by a computer or machine or system or other device.

Some embodiments may be implemented using suitable hardware components and/or software components; a processor able to execute code or programs or machine-readable instructions (e.g., a Central Processing Unit (CPU), a Digital Signal Processor (DSP), an Integrated Circuit (IC), a logic unit, or the like); a storage unit to store received data and/or processed data (e.g., hard disk drive, solid state drive); a memory unit to store data for short term (e.g., Random Access Memory (RAM) memory, Flash memory); a transceiver able to send and receive data using one or more wireless communication protocols (e.g., Wi-Fi communication, cellular communication, TCP/IP communication); and other suitable components (e.g., input unit such as keyboard and mouse; output unit such as display unit; power source; or the like).

Some implementations may utilize code or program code or machine-readable instructions or machine-readable code, which may be stored on a non-transitory storage medium or non-transitory storage article (e.g., a CD-ROM, a DVD-ROM, a physical memory unit, a physical storage unit), such that the program or code or instructions, when executed by a processor or a machine or a computer, cause such processor or machine or computer to perform a method or process as described herein. Such code or instructions may be or may comprise, for example, one or more of: software, a software module, an application, a program, a subroutine, instructions, an instruction set, computing code, words, values, symbols, strings, variables, source code, compiled code, interpreted code, executable code, static code, dynamic code; including (but not limited to) code or instructions in high-level programming language, low-level programming language, object-oriented programming language, visual programming language, compiled programming language, interpreted programming language, C, C++, C#, Java, JavaScript, SQL, Ruby on Rails, Go, Cobol, Fortran, ActionScript, AJAX, XML, JSON, Lisp, Eiffel, Verilog, Hardware Description Language (HDL), Register-Transfer Level (RTL), BASIC, Visual BASIC, Matlab, Pascal, HTML, HTML5, CSS, Perl, Python, PHP, machine language, machine code, assembly language, or the like.

Discussions herein utilizing terms such as, for example, "processing", "computing", "calculating", "generating", "determining", "establishing", "analyzing", "checking", "detecting", "measuring", or the like, may refer to operation(s) and/or process(es) of a processor, a computer, a computing platform, a computing system, or other electronic device or computing device, that may automatically and/or autonomously manipulate and/or transform data represented as physical (e.g., electronic) quantities within registers and/or accumulators and/or memory units and/or storage units into other data or that may perform other suitable operations.

Some embodiments may perform steps or operations such as, for example, "determining", "identifying", "comparing", "checking", "querying", "searching", "matching", and/or "analyzing", by utilizing, for example: a pre-defined threshold value to which one or more parameter values may be compared; a comparison between (i) sensed or measured or calculated value(s), and (ii) pre-defined or dynamically-generated threshold value(s) and/or range values and/or upper limit value and/or lower limit value and/or maximum value and/or minimum value; a comparison or matching between sensed or measured or calculated data, and one or more values as stored in a look-up table or a legend table or a legend list or a database of possible values or ranges; a comparison or matching or searching process which searches for matches and/or identical results and/or similar results among multiple values or limits that are stored in a database or look-up table; utilization of one or more equations, formula, weighted formula, and/or other calculation in order to determine similarity or a match between or among parameters or values; utilization of comparator units, lookup tables, threshold values, conditions, conditioning logic, Boolean operator(s) and/or other suitable components and/or operations.

The terms "plurality" and "a plurality", as used herein, include, for example, "multiple" or "two or more". For example, "a plurality of items" includes two or more items.

References to "one embodiment", "an embodiment", "demonstrative embodiment", "various embodiments", "some embodiments", and/or similar terms, may indicate that the embodiment(s) so described may optionally include a particular feature, structure, or characteristic, but not every embodiment necessarily includes the particular feature, structure, or characteristic. Furthermore, repeated use of the phrase "in one embodiment" does not necessarily refer to the same embodiment, although it may. Similarly, repeated use of the phrase "in some embodiments" does not necessarily refer to the same set or group of embodiments, although it may.

As used herein, and unless otherwise specified, the utilization of ordinal adjectives such as "first", "second", "third", "fourth", and so forth, to describe an item or an object, merely indicates that different instances of such like items or objects are being referred to; and does not intend to imply as if the items or objects so described must be in a particular given sequence, either temporally, spatially, in ranking, or in any other ordering manner.

Some implementations may be used in, or in conjunction with, various devices and systems, for example, a Personal Computer (PC), a desktop computer, a mobile computer, a laptop computer, a notebook computer, a tablet computer, a server computer, a handheld computer, a handheld device, a Personal Digital Assistant (PDA) device, a handheld PDA device, a tablet, an on-board device, an off-board device, a hybrid device, a vehicular device, a non-vehicular device, a mobile or portable device, a consumer device, a non-mobile or non-portable device, an appliance, a wireless communication station, a wireless communication device, a wireless Access Point (AP), a wired or wireless router or gateway or switch or hub, a wired or wireless modem, a video device, an audio device, an audio-video (A/V) device, a wired or wireless network, a wireless area network, a Wireless Video Area Network (WVAN), a Local Area Network (LAN), a Wireless LAN (WLAN), a Personal Area Network (PAN), a Wireless PAN (WPAN), or the like.

Some implementations may be used in conjunction with one way and/or two-way radio communication systems, cellular radio-telephone communication systems, a mobile phone, a cellular telephone, a wireless telephone, a Personal Communication Systems (PCS) device, a PDA or handheld device which incorporates wireless communication capabilities, a mobile or portable Global Positioning System (GPS) device, a device which incorporates a GPS receiver or transceiver or chip, a device which incorporates an RFID element or chip, a Multiple Input Multiple Output (MIMO) transceiver or device, a Single Input Multiple Output (SIMO) transceiver or device, a Multiple Input Single Output (MISO) transceiver or device, a device having one or more internal antennas and/or external antennas, Digital Video Broadcast (DVB) devices or systems, multi-standard radio devices or systems, a wired or wireless handheld device, e.g., a Smartphone, a Wireless Application Protocol (WAP) device, or the like.

Some implementations may comprise, or may be implemented by using, an "app" or application which may be downloaded or obtained from an "app store" or "applications store", for free or for a fee, or which may be pre-installed on a computing device or electronic device, or which may be otherwise transported to and/or installed on such computing device or electronic device.

Functions, operations, components and/or features described herein with reference to one or more implementations, may be combined with, or may be utilized in combination with, one or more other functions, operations, components and/or features described herein with reference to one or more other implementations. Some embodiments may comprise any possible or suitable combinations, re-arrangements, assembly, re-assembly, or other utilization of some or all of the modules or functions or components or units that are described herein, even if they are discussed in different locations or different chapters of the above discussion, or even if they are shown across different drawings or multiple drawings.

## Claims

1. A system (100) comprising:
one or more processors that are configured to execute code,
wherein the one or more processors are operably associated with one or more memory units that are configured to store code;
wherein the system (100) is configured to protect a Protected Engine (101) that is a unit selected from the group consisting of: a Machine Learning unit, a Deep Learning unit, an Artificial Intelligence unit, a Neural Network unit;
wherein the system (100) is configured to protect the Protected Engine (101) against malicious inputs and malicious queries and malicious training data and malicious attacks;
wherein the system (100) comprises:
(a) an Offline Protection Unit (122), configured to analyze one or more characteristics of the Protected Engine (101), and to perform offline fortification of said Protected Engine (101) against attacks by changing one or more operational properties or operational parameters of the Protected Engine (101) and to reduce its vulnerability to attacks;
(b) an Online Protection Unit (123), configured to perform analysis of at least one of:
(i) one or more inputs that are directed to be inputs of the Protected Engine (101),
(ii) one or more outputs that are generated by the Protected Engine (101);
and based on said analysis, to dynamically perform online fortification of said Protected Engine (101) against attacks by dynamically changing one or more operational properties or operational parameters of the Protected Engine (101) and to reduce its vulnerability to attacks,
wherein the Online Protection Unit (123) is further configured to modify an operational architecture of said Protected Engine (101), from being a stand-alone or independent Protected Engine (101), to being a Protected Engine (101) that is part of a multi-engine pipeline or multi-engine cascade structure that is more resilient to attacks relative to the stand-alone or independent Protected Engine (101).

2. The system (100) of claim 1,
wherein the Protected Engine (101) utilizes a Protected Model (104) that is selected from the group consisting of: a Machine Learning model, a Deep Learning model, an Artificial Intelligence model;
wherein at least one of the Offline Protection Unit (122) and the Online Protection Unit (123), is configured to automatically modify said Protected Model (104), from a pre-modification model version that is vulnerable to a particular attack, to a post-modification model version that is not vulnerable at all or that is less vulnerable to said particular attack.

3. The system (100) of any one of claims 1-2,
wherein the Protected Engine (101) operates based on a Protected Dataset (102);
wherein at least one of the Offline Protection Unit (122) and the Online Protection Unit (123), is configured to automatically modify said Protected Dataset (102), from a pre-modification dataset version that causes the Protected Engine (101) to be vulnerable to a particular attack, to a post-modification dataset version that causes the Protected Engine (101) to be not vulnerable at all or less vulnerable to said particular attack.

4. The system (100) of any one of claims 1-2,
wherein the Protected Engine (101) operates based on a Protected Dataset (102);
wherein at least one of the Offline Protection Unit (122) and the Online Protection Unit (123),
is configured to automatically modify said Protected Dataset (102), from a pre-modification dataset version that causes the Protected Engine (101) to be vulnerable to a particular attack, to a post-modification dataset version that causes the Protected Engine (101) to be not vulnerable at all or less vulnerable to said particular attack,
by generating and adding Adversarial Data to said Protected Dataset (102) and by initiating re-training of the Protected Engine (101) based on the post-modification dataset version.

5. The system (100) of any one of claims 1-4,
wherein the Protected Engine (101) utilizes a Protected Architecture having a particular number of pipeline operations that utilize particular values of operational parameters;
wherein at least one of the Offline Protection Unit (122) and the Online Protection Unit (123),
is configured to automatically modify said Protected Architecture,
from a pre-modification architecture version that causes the Protected Engine (101) to be vulnerable to a particular attack, to a post-modification architecture version that causes the Protected Engine (101) to be not vulnerable at all or less vulnerable to said particular attack,
by performing one or more of the following operations:
(I) modifying a number or an order of said pipeline operations or by modifying one or more of said particular values of operational parameters;
(II) adding to said Protected Architecture a pre-processing unit that performs an additional operation on inputs received by the Protected Engine (101);
(III) adding to said Protected Architecture a post-processing unit that performs an additional operation on outputs generated by the Protected Engine (101) prior to transferring said outputs to an intended recipient;
(IV) adding to a pipeline of the Protected Architecture an attack detector unit that analyses inputs and determines whether a particular input or a particular group of inputs relate to an attack on the Protected Engine (101).

6. The system (100) of any one of claims 1-4,
wherein the Protected Engine (101) utilizes a Protected Architecture having a particular number of pipeline operations that utilize particular values of operational parameters;
wherein at least one of the Offline Protection Unit (122) and the Online Protection Unit (123),
is configured to automatically modify said Protected Architecture,
by performing at least one of:
(i) intentionally delaying responses that are outputted from said Protected Engine (101) towards a particular recipient;
(ii) intentionally providing incorrect outputs from said Protected Engine (101) towards a particular recipient that is determined to be an origin of malicious queries.

7. The system (100) of any one of claims 1-6,
wherein at least one of the Offline Protection Unit (122) and the Online Protection Unit (123),
is configured to utilize a Secondary Engine (131) that is selected from the group consisting of: a secondary Machine Learning engine, a secondary Deep Learning engine, a secondary Artificial Intelligence engine,
to perform a secondary classification of an input query that is received from a particular originating entity;
and based on a classification of said input query performed by the Secondary Engine (131), to determine whether or not said input query is part of a malicious attack on the Protected Engine (101).

8. The system (100) of any one of claims 1-7,
further comprising an Artificial Intelligence based Penetration-Testing Unit,
configured to perform, in a controlled manner, automated penetration tests against said Protected Engine (101),
and configured to estimate a quantitative level of resilience of said Protected Engine (101) against various types of attacks.

9. The system (100) of any one of claims 1-8, comprising:
a Defense Policy Constructor Unit (140),
configured to construct a user-configurable Defense Policy that is defined by a plurality of user-configurable operational constraints of the Protected Engine (101),
and configured to dynamically select and invoke and enforce a particular Protection Scheme, from a pool of multiple available Protection Schemes, that protects the Protected Engine (101) against attacks while also complying with the user-configurable operational constraints;
wherein the Defense Policy Constructor Unit (140) is configured to enable a user to input (i) defense goals for protecting the Protected Engine (101), and also (ii) operational constraints that the Protected Engine (101) and/or the system should comply with;
wherein the system further comprises a Defense Optimization Unit, that operates based on said defense goals and said operational constraints as provided by said user, and that is configured to dynamically select and apply a particular set of defense techniques to prevent or to mitigate attacks against the Protected Engine (101);
wherein the Defense Optimization Unit is configured to operate based on Artificial Intelligence based estimation or Artificial Intelligence based prediction of effective defense techniques that should be selected and applied for protecting said Protected Engine (101), based on Artificial Intelligence based analysis of historic data of protecting a plurality of different Artificial Intelligence engines and/or Machine Learning engines and/or Deep Learning engines.

10. The system (100) of any one of claims 1-9, comprising:
an Attack Mitigation Unit (124),
that is configured to select and to activate one or more deterministic and non Artificial Intelligence based mitigation techniques, in response to a determination that the Protected Engine (101) is being attacked,
and that is also configured to select and to activate one or more Artificial Intelligence based non-deterministic mitigation techniques, in response to the determination that the Protected Engine (101) is being attacked.

11. The system of any one of claims 1-10, comprising:
a Non-Intrusive Defense Unit (164), configured to perform pre-processing operations and/or post-processing operations that block a detected attack against the Protected Engine (101), using a protection method that excludes modifying a model that is utilized by the Protected Engine (101), and that excludes re-training the Protected Engine (101) on a modified dataset, and that excludes having access to an internal pipeline of operations that is performed by the Protected Engine (101).

12. The system (100) of any one of claims 1-11,
wherein the Protected Engine (101) of said system is a Protected Engine (101) selected from the group consisting of:
(I) a Protected Engine (101) that is protected against malicious queries and malicious inputs by said system which is a remote, cloud-computing based system that is remote from said Protected Engine (101) and is not co-located with said Protected Engine (101);
(II) a Protected Engine (101) that is one protected engine within a combination or a cascade or a pipeline of two or more Artificial Intelligence or Machine Learning or Deep Learning engines; wherein the system is configured to perform protection operations to protect at least a portion of said combination or cascade or pipeline of two or more Artificial Intelligence or Machine Learning or Deep Learning engines.

13. The system (100) of any one of claims 1-12,
wherein the Online Protection Unit (123) is configured to introduce and to invoke a Pre-Processing module that performs defensive pre-processing of input signals that are directed towards said Protected Engine (101).

14. The system (100) of any one of claims 1-13,
wherein the Online Protection Unit (123) is configured to introduce and to invoke a Post-Processing module that performs defensive post-processing of output signals that are generated and outputted by said Protected Engine (101) prior to their delivery to intended recipients.

## Patentansprüche

1. System (100), umfassend:
einen oder mehrere Prozessoren, die konfiguriert sind, um Code auszuführen,
wobei der eine oder die mehreren Prozessoren mit einer oder mehreren Speichereinheiten wirkverbunden sind, die konfiguriert sind, um Code zu speichern;
wobei das System (100) konfiguriert ist, um eine Protected Engine (101) zu schützen, die eine Einheit ist, ausgewählt aus der Gruppe bestehend aus: einer Machine-Learning-Einheit, einer Deep-Learning-Einheit, einer Einheit für künstliche Intelligenz, einer neuronalen Netzwerkeinheit;
wobei das System (100) konfiguriert ist, um die Protected Engine (101) vor böswilligen Eingaben und böswilligen Abfragen und böswilligen Trainingsdaten und böswilligen Angriffen zu schützen;
wobei das System (100) umfasst:
(a) eine Offline-Schutzeinheit (122), die konfiguriert ist, um eine oder mehrere Eigenschaften der Protected Engine (101) zu analysieren und eine Offline-Verstärkung der Protected Engine (101) gegen Angriffe durch Ändern einer oder mehrerer Betriebseigenschaften oder Betriebsparameter der Protected Engine (101) durchzuführen und ihre Anfälligkeit für Angriffe zu verringern;
(b) eine Online-Schutzeinheit (123), die konfiguriert ist, um eine Analyse von mindestens einem der Folgenden durchzuführen:
(i) eine oder mehrere Eingaben, die darauf gerichtet sind, Eingaben der Protected Engine (101) zu sein,
(ii) eine oder mehrere Ausgaben, die von der Protected Engine (101) erzeugt werden;
und auf der Grundlage der Analyse eine Online-Verstärkung der Protected Engine (101) gegen Angriffe dynamisch durchzuführen, indem eine oder mehrere Betriebseigenschaften oder Betriebsparameter der Protected Engine (101) dynamisch geändert werden, und ihre Anfälligkeit für Angriffe zu verringern,
wobei die Online-Schutzeinheit (123) ferner konfiguriert ist, um eine Betriebsarchitektur der Protected Engine (101) von einer eigenständigen oder unabhängigen Protected Engine (101) zu einer Protected Engine (101) zu modifizieren, die Teil einer Multi-Engine-Pipeline- oder Multi-Engine-Kaskadenstruktur ist, die im Vergleich zu der eigenständigen oder unabhängigen Protected Engine (101) resilienter gegenüber Angriffen ist.

2. System (100) nach Anspruch 1,
wobei die Protected Engine (101) ein Protected Model (104) verwendet, das ausgewählt ist aus der Gruppe, bestehend aus: einem Machine-Learning-Modell, einem Deep-Learning-Modell, einem Modell für künstliche Intelligenz;
wobei mindestens eine der Offline-Schutzeinheit (122) und der Online-Schutzeinheit (123) konfiguriert ist, um das Protected Model (104) automatisch von einer Vor-Modifikations-Modellversion, die für einen bestimmten Angriff anfällig ist, in eine Nach-Modifikations-Modellversion zu modifizieren, die für den bestimmten Angriff überhaupt nicht anfällig oder weniger anfällig ist.

3. System (100) nach einem der Ansprüche 1 bis 2,
wobei die Protected Engine (101) basierend auf einem Protected Dataset (102) arbeitet;
wobei mindestens eine der Offline-Schutzeinheit (122) und der Online-Schutzeinheit (123) konfiguriert ist, um den Protected Dataset (102) automatisch von einer Datensatzversion vor der Modifikation, die bewirkt, dass die Protected Engine (101) für einen bestimmten Angriff anfällig ist, in eine Datensatzversion nach der Modifikation, die bewirkt, dass die Protected Engine (101) für den bestimmten Angriff überhaupt nicht oder weniger anfällig ist, zu modifizieren.

4. System (100) nach einem der Ansprüche 1 bis 2,
wobei die Protected Engine (101) basierend auf einem Protected Dataset (102) arbeitet;
wobei mindestens eine der Offline-Schutzeinheit (122) und der Online-Schutzeinheit (123),
konfiguriert ist, um den Protected Dataset (102) automatisch von einer Datensatzversion vor der Modifikation, die bewirkt, dass die Protected Engine (101) für einen bestimmten Angriff anfällig ist, in eine Datensatzversion nach der Modifikation, die bewirkt, dass die Protected Engine (101) für den bestimmten Angriff überhaupt nicht oder weniger anfällig ist, zu modifizieren,
durch Erzeugen und Hinzufügen von Adversarial Data zu dem Protected Dataset (102) und durch Initiieren eines erneuten Trainierens der Protected Engine (101) basierend auf der Datensatzversion nach der Modifikation.

5. System (100) nach einem der Ansprüche 1 bis 4,
wobei die Protected Engine (101) eine Protected Architecture verwendet, die eine bestimmte Anzahl von Pipeline-Vorgängen aufweist, die bestimmte Werte von Betriebsparametern verwenden;
wobei mindestens eine der Offline-Schutzeinheit (122) und der Online-Schutzeinheit (123),
konfiguriert ist, um die Protected Architecture automatisch zu modifizieren,
von einer Architekturversion vor der Modifikation, die bewirkt, dass die Protected Engine (101) für einen bestimmten Angriff anfällig ist, zu einer Architekturversion nach der Modifikation, die bewirkt, dass die Protected Engine (101) für den bestimmten Angriff überhaupt nicht oder weniger anfällig ist,
durch Durchführen einer oder mehrerer der folgenden Vorgänge:
(I) Modifizieren einer Anzahl oder einer Reihenfolge der Pipeline-Vorgänge oder durch Modifizieren eines oder mehrerer der bestimmten Werte von Betriebsparametern;
(II) Hinzufügen einer Vorverarbeitungseinheit zu der Protected Architecture, die einen zusätzlichen Vorgang an von der Protected Engine (101) empfangenen Eingaben durchführt;
(III) Hinzufügen einer Nachbearbeitungseinheit zu der Protected Architecture, die einen zusätzliche Vorgang an von der Protected Engine (101) erzeugten Ausgaben durchführt, vor dem Übertragen der Ausgaben an einen vorgesehenen Empfänger;
(IV) Hinzufügen einer Angriffsdetektoreinheit zu einer Pipeline der Protected Architecture, die Eingaben analysiert und bestimmt, ob sich eine bestimmte Eingabe oder eine bestimmte Gruppe von Eingaben auf einen Angriff auf die Protected Engine (101) beziehen.

6. System (100) nach einem der Ansprüche 1 bis 4,
wobei die Protected Engine (101) eine Protected Architecture verwendet, die eine bestimmte Anzahl von Pipeline-Vorgängen aufweist, die bestimmte Werte von Betriebsparametern verwenden;
wobei mindestens eine der Offline-Schutzeinheit (122) und der Online-Schutzeinheit (123),
konfiguriert ist, um die Protected Architecture automatisch zu modifizieren,
durch Durchführen von mindestens einem von:
(i) absichtlichem Verzögern von Antworten, die von der Protected Engine (101) an einen bestimmten Empfänger ausgegeben werden;
(ii) absichtlichem Bereitstellen inkorrekter Ausgaben von der Protected Engine (101) an einen bestimmten Empfänger, der als Ursprung böswilliger Abfragen bestimmt wird.

7. System (100) nach einem der Ansprüche 1 bis 6,
wobei mindestens eine der Offline-Schutzeinheit (122) und der Online-Schutzeinheit (123),
konfiguriert ist, um eine Secondary Engine (131) zu verwenden, die aus der Gruppe ausgewählt ist, bestehend aus: einer Secondary Engine für Machine Learning, einer Secondary Engine für Deep Learning, einer Secondary Engine für künstliche Intelligenz,
eine sekundäre Klassifizierung einer Eingabeabfrage, die von einer bestimmten Ursprungsentität empfangen wird, durchzuführen;
und, basierend auf einer durch die Secondary Engine (131) durchgeführten Klassifizierung der Eingabeabfrage, zu bestimmen, ob die Eingabeabfrage Teil eines böswilligen Angriffs auf die Protected Engine (101) ist oder nicht.

8. System (100) nach einem der Ansprüche 1 bis 7,
ferner umfassend eine auf künstlicher Intelligenz basierende Penetrationstesteinheit,
die konfiguriert ist, um auf kontrollierte Weise automatisierte Penetrationstests gegen die Protected Engine (101) durchzuführen,
und konfiguriert ist, um ein quantitatives Maß an Resilienz der Protected Engine (101) gegen verschiedene Arten von Angriffen zu schätzen.

9. System (100) nach einem der Ansprüche 1 bis 8, umfassend:
eine Verteidigungsrichtlinienerstellungseinheit (140),
die konfiguriert ist, um eine benutzerkonfigurierbare Verteidigungsrichtlinie zu erstellen, die durch eine Vielzahl von benutzerkonfigurierbaren Betriebseinschränkungen der Protected Engine (101) definiert ist,
und konfiguriert ist, um ein bestimmtes Schutzschema aus einem Pool von mehreren verfügbaren Schutzschemata dynamisch auszuwählen und aufzurufen und durchzusetzen, das die Protected Engine (101) vor Angriffen schützt, während es gleichzeitig die benutzerkonfigurierbaren Betriebseinschränkungen einhält;
wobei die Verteidigungsrichtlinienerstellungseinheit (140) konfiguriert ist, um es einem Benutzer zu ermöglichen, (i) Verteidigungsziele zum Schutz der Protected Engine (01) und auch (ii) betriebliche Einschränkungen, die die Protected Engine (101) und/oder das System einhalten sollen, einzugeben;
wobei das System ferner eine Verteidigungsoptimierungseinheit umfasst, die basierend auf den Verteidigungszielen und den betrieblichen Einschränkungen, wie durch den Benutzer bereitgestellt, arbeitet und die konfiguriert ist, um einen bestimmten Satz von Verteidigungstechniken dynamisch auszuwählen und anzuwenden, um Angriffe auf die Protected Engine (101) zu verhindern oder abzuschwächen;
wobei die Verteidigungsoptimierungseinheit konfiguriert ist, um basierend auf einer auf künstlicher Intelligenz basierenden Schätzung oder einer auf künstlicher Intelligenz basierenden Vorhersage von effektiven Verteidigungstechniken zu arbeiten, die zum Schützen der Protected Engine (101) ausgewählt und angewendet werden sollten, basierend auf einer auf künstlicher Intelligenz basierenden Analyse von Verlaufsdaten zum Schützen einer Vielzahl von verschiedenen Engines für künstliche Intelligenz und/oder Engines für Machine Learning und/oder Engines für Deep Learning.

10. System (100) nach einem der Ansprüche 1 bis 9, umfassend:
eine Angriffsabschwächungseinheit (124),
die konfiguriert ist, um eine oder mehrere deterministische und nicht auf künstlicher Intelligenz basierende Mitigationstechniken auszuwählen und zu aktivieren, als Reaktion auf eine Bestimmung, dass die Protected Engine (101) angegriffen wird,
und die zudem konfiguriert ist, um eine oder mehrere auf künstlicher Intelligenz basierende nicht-deterministische Mitigationstechniken auszuwählen und zu aktivieren, als Reaktion auf die Bestimmung, dass die Protected Engine (101) angegriffen wird.

11. System nach einem der Ansprüche 1 bis 10, umfassend:
eine nicht-intrusive Verteidigungseinheit (164), die konfiguriert ist, um Vorverarbeitungvorgänge und/oder Nachverarbeitungsvorgänge durchzuführen, die einen detektierten Angriff gegen die Protected Engine (101) blockieren, unter Verwendung eines Schutzverfahrens, das das Modifizieren eines Modells ausschließt, das von der Protected Engine (101) genutzt wird, und das das erneute Trainieren der Protected Engine (101) an einem modifizierten Datensatz ausschließt, und das den Zugriff auf eine interne Pipeline von Vorgängen ausschließt, die von der Protected Engine (101) durchgeführt wird.

12. System (100) nach einem der Ansprüche 1 bis 11,
wobei die Protected Engine (101) des Systems eine Protected Engine (101) ist, ausgewählt aus der Gruppe, bestehend aus:
(I) einer Protected Engine (101), die gegen böswillige Abfragen und böswillige Eingaben durch das System geschützt ist, das ein entferntes, Cloud-Computing-basiertes System ist, das von der Protected Engine (101) entfernt ist und nicht am Standort der Protected Engine (101) angeordnet ist;
(II) einer Protected Engine (101), die eine Protected Engine innerhalb einer Kombination oder einer Kaskade oder einer Pipeline von zwei oder mehr Engines für künstliche Intelligenz oder Machine Learning oder Deep Learning ist; wobei das System konfiguriert ist, um Schutzvorgänge durchzuführen, um mindestens einen Teil der Kombination oder Kaskade oder Pipeline von zwei oder mehr Engines für künstliche Intelligenz oder Machine Learning oder Deep Learning zu schützen.

13. System (100) nach einem der Ansprüche 1 bis 12,
wobei die Online-Schutzeinheit (123) konfiguriert ist, um ein Vorverarbeitungsmodul einzuführen und aufzurufen, das eine defensive Vorverarbeitung von Eingabesignalen durchführt, die an die Protected Engine (101) gerichtet sind.

14. System (100) nach einem der Ansprüche 1 bis 13,
wobei die Online-Schutzeinheit (123) konfiguriert ist, um ein Nachbearbeitungsmodul einzuführen und aufzurufen, das eine defensive Nachbearbeitung von Ausgabesignalen durchführt, die von der Protected Engine (101) erzeugt und ausgegeben werden, vor deren Übermittlung an vorgesehene Empfänger.

## Revendications

1. Système (100) comprenant :
un ou plusieurs processeurs qui sont configurés pour exécuter du code,
dans lequel le ou les processeurs sont associés de manière opérationnelle à une ou plusieurs unités de mémoire qui sont configurées pour stocker du code ;
dans lequel le système (100) est configuré pour protéger un Moteur Protégé (101) qui est une unité choisie parmi le groupe constitué par : une unité d'apprentissage automatique, une unité d'apprentissage profond, une unité d'intelligence artificielle, une unité de réseau de neurones ;
dans lequel le système (100) est configuré pour protéger le Moteur Protégé (101) contre des entrées malveillantes et des requêtes malveillantes et des données d'entraînement malveillantes et des attaques malveillantes ;
dans lequel le système (100) comprend :
(a) une unité de protection hors ligne (122), configurée pour analyser une ou plusieurs caractéristiques du Moteur Protégé (101), et pour effectuer une fortification hors ligne dudit Moteur Protégé (101) contre des attaques en modifiant une ou plusieurs propriétés opérationnelles ou un ou plusieurs paramètres opérationnels du Moteur Protégé (101) et pour réduire sa vulnérabilité aux attaques ;
(b) une unité de protection en ligne (123), configurée pour effectuer une analyse d'au moins l'une parmi :
(i) une ou plusieurs entrées qui sont dirigées pour être des entrées du Moteur Protégé (101),
(ii) une ou plusieurs sorties qui sont générées par le Moteur Protégé (101) ;
et en fonction de ladite analyse, pour effectuer dynamiquement une fortification en ligne dudit Moteur Protégé (101) contre les attaques en modifiant dynamiquement une ou plusieurs propriétés opérationnelles ou un ou plusieurs paramètres opérationnels du Moteur Protégé (101) et pour réduire sa vulnérabilité aux attaques,
dans lequel l'unité de protection en ligne (123) est en outre configurée pour modifier une architecture opérationnelle dudit Moteur Protégé (101), pour passer d'un Moteur Protégé (101) autonome ou indépendant, à un Moteur Protégé (101) qui fait partie d'un pipeline multi-moteurs ou d'une structure en cascade multi-moteurs qui est plus résilient aux attaques par rapport au Moteur Protégé (101) autonome ou indépendant.

2. Système (100) selon la revendication 1,
dans lequel le Moteur Protégé (101) utilise un Modèle Protégé (104) qui est choisi parmi le groupe constitué par : un modèle d'apprentissage automatique, un modèle d'apprentissage profond, un modèle d'intelligence artificielle ;
dans lequel au moins l'une parmi l'unité de protection hors ligne (122) et l'unité de protection en ligne (123), est configurée pour modifier automatiquement ledit Modèle Protégé (104), d'une version de modèle pré-modification qui est vulnérable à une attaque particulière, à une version de modèle post-modification qui n'est pas du tout vulnérable ou qui est moins vulnérable à ladite attaque particulière.

3. Système (100) selon l'une quelconque des revendications 1-2,
dans lequel le Moteur Protégé (101) fonctionne en fonction d'un ensemble de données protégé (102) ;
dans lequel au moins l'une parmi l'unité de protection hors ligne (122) et l'unité de protection en ligne (123), est configurée pour modifier automatiquement ledit ensemble de données protégé (102), d'une version d'ensemble de données pré-modification qui rend le Moteur Protégé (101) vulnérable à une attaque particulière, à une version d'ensemble de données post-modification qui rend le Moteur Protégé (101) pas du tout vulnérable ou moins vulnérable à ladite attaque particulière.

4. Système (100) selon l'une quelconque des revendications 1-2,
dans lequel le Moteur Protégé (101) fonctionne en fonction d'un ensemble de données protégé (102) ;
dans lequel au moins l'une parmi l'unité de protection hors ligne (122) et l'unité de protection en ligne (123),
est configurée pour modifier automatiquement ledit ensemble de données protégé (102), d'une version d'ensemble de données pré-modification qui rend le Moteur Protégé (101) vulnérable à une attaque particulière, à une version d'ensemble de données post-modification qui rend le Moteur Protégé (101) pas du tout vulnérable ou moins vulnérable à ladite attaque particulière,
en générant et en ajoutant des données antagonistes audit ensemble de données protégé (102) et en initiant le réentraînement du Moteur Protégé (101) en fonction de la version d'ensemble de données post-modification.

5. Système (100) selon l'une quelconque des revendications 1-4,
dans lequel le Moteur Protégé (101) utilise une architecture protégée ayant un nombre particulier d'opérations de pipeline qui utilisent des valeurs particulières de paramètres opérationnels ;
dans lequel au moins l'une parmi l'unité de protection hors ligne (122) et l'unité de protection en ligne (123),
est configurée pour modifier automatiquement ladite architecture protégée,
d'une version d'architecture pré-modification qui rend le Moteur Protégé (101) vulnérable à une attaque particulière, à une version d'architecture post-modification qui rend le Moteur Protégé (101) pas du tout vulnérable ou moins vulnérable à ladite attaque particulière,
en effectuant une ou plusieurs des opérations suivantes :
(I) la modification d'un nombre ou d'un ordre desdites opérations de pipeline ou la modification d'une ou plusieurs desdites valeurs particulières de paramètres opérationnels ;
(II) l'ajout à ladite architecture protégée d'une unité de prétraitement qui effectue une opération supplémentaire sur des entrées reçues par le Moteur Protégé (101) ;
(III) l'ajout à ladite architecture protégée d'une unité de post-traitement qui effectue une opération supplémentaire sur des sorties générées par le Moteur Protégé (101) avant de transférer lesdites sorties à un destinataire prévu ;
(IV) l'ajout, à un pipeline de l'architecture protégée, d'une unité de détection d'attaque qui analyse les entrées et détermine si une entrée particulière ou un groupe particulier d'entrées se rapporte à une attaque sur le Moteur Protégé (101).

6. Système (100) selon l'une quelconque des revendications 1-4,
dans lequel le Moteur Protégé (101) utilise une architecture protégée ayant un nombre particulier d'opérations de pipeline qui utilisent des valeurs particulières de paramètres opérationnels ;
dans lequel au moins l'une parmi l'unité de protection hors ligne (122) et l'unité de protection en ligne (123),
est configurée pour modifier automatiquement ladite architecture protégée,
en effectuant au moins l'un parmi :
(i) le retardement intentionnel des réponses qui sont émises dudit Moteur Protégé (101) vers un destinataire particulier ;
(ii) la fourniture intentionnelle des sorties incorrectes dudit Moteur Protégé (101) vers un destinataire particulier qui est déterminé comme étant à l'origine de requêtes malveillantes.

7. Système (100) selon l'une quelconque des revendications 1-6,
dans lequel au moins l'une parmi l'unité de protection hors ligne (122) et l'unité de protection en ligne (123),
est configurée pour utiliser un moteur secondaire (131) qui est choisi dans le groupe constitué par : un moteur d'apprentissage automatique secondaire, un moteur d'apprentissage profond secondaire, un moteur d'intelligence artificielle secondaire,
pour effectuer une classification secondaire d'une requête d'entrée qui est reçue d'une entité d'origine particulière ;
et en fonction d'une classification de ladite requête d'entrée effectuée par le moteur secondaire (131), pour déterminer si ladite requête d'entrée fait partie d'une attaque malveillante sur le Moteur Protégé (101).

8. Système (100) selon l'une quelconque des revendications 1-7,
comprenant en outre une unité de test d'intrusion basée sur l'intelligence artificielle,
configurée pour effectuer, de manière contrôlée, des tests d'intrusion automatisés contre ledit Moteur Protégé (101),
et configurée pour estimer un niveau quantitatif de résilience dudit Moteur Protégé (101) contre divers types d'attaques.

9. Système (100) selon l'une quelconque des revendications 1-8, comprenant :
une unité de construction de politique de défense (140),
configurée pour construire une politique de défense configurable par l'utilisateur qui est définie par une pluralité de contraintes opérationnelles configurables par l'utilisateur du Moteur Protégé (101),
et configurée pour sélectionner et invoquer et appliquer dynamiquement un schéma de protection particulier, à partir d'un ensemble de multiples schémas de protection disponibles, qui protège le Moteur Protégé (101) contre les attaques tout en se conformant également aux contraintes opérationnelles configurables par l'utilisateur ;
dans lequel l'unité de construction de politique de défense (140) est configurée pour permettre à un utilisateur d'entrer (i) des objectifs de défense pour protéger le Moteur Protégé (01), et également (ii) des contraintes opérationnelles auxquelles le Moteur Protégé (101) et/ou le système doivent se conformer ;
dans lequel le système comprend en outre une unité d'optimisation de défense, qui fonctionne en fonction desdits objectifs de défense et desdites contraintes opérationnelles tels que fournis par ledit utilisateur, et qui est configurée pour sélectionner et appliquer dynamiquement un ensemble particulier de techniques de défense pour prévenir ou atténuer les attaques contre le Moteur Protégé (101) ;
dans lequel l'unité d'optimisation de défense est configurée pour fonctionner en fonction d'une estimation basée sur l'intelligence artificielle ou d'une prédiction basée sur l'intelligence artificielle de techniques de défense efficaces qui doivent être sélectionnées et appliquées pour protéger ledit Moteur Protégé (101), en fonction d'une analyse basée sur l'intelligence artificielle de données historiques de protection d'une pluralité de différents moteurs d'intelligence artificielle et/ou moteurs d'apprentissage automatique et/ou moteurs d'apprentissage profond.

10. Système (100) selon l'une quelconque des revendications 1-9, comprenant :
une unité d'atténuation d'attaque (124),
qui est configurée pour sélectionner et pour activer une ou plusieurs techniques d'atténuation déterministes et non basées sur l'intelligence artificielle, en réponse à une détermination que le Moteur Protégé (101) est attaqué,
et qui est également configurée pour sélectionner et pour activer une ou plusieurs techniques d'atténuation non déterministes basées sur l'intelligence artificielle, en réponse à la détermination que le Moteur Protégé (101) est attaqué.

11. Système selon l'une quelconque des revendications 1-10, comprenant :
une unité de défense non intrusive (164), configurée pour effectuer des opérations de prétraitement et/ou des opérations de post-traitement qui bloquent une attaque détectée contre le Moteur Protégé (101), à l'aide d'un procédé de protection qui exclut la modification d'un modèle qui est utilisé par le Moteur Protégé (101), et qui exclut le réentraînement du Moteur Protégé (101) sur un ensemble de données modifié, et qui exclut le fait d'avoir accès à un pipeline interne d'opérations qui est effectué par le Moteur Protégé (101).

12. Système (100) selon l'une quelconque des revendications 1-11,
dans lequel le Moteur Protégé (101) dudit système est un Moteur Protégé (101) choisi parmi le groupe constitué par :
(I) un Moteur Protégé (101) qui est protégé contre des requêtes malveillantes et des entrées malveillantes par ledit système qui est un système distant basé sur l'informatique en nuage qui est distant dudit Moteur Protégé (101) et n'est pas colocalisé avec ledit Moteur Protégé (101) ;
(II) un Moteur Protégé (101) qui est un moteur protégé au sein d'une combinaison ou d'une cascade ou d'un pipeline de deux ou plusieurs moteurs d'intelligence artificielle ou d'apprentissage automatique ou d'apprentissage profond ; dans lequel le système est configuré pour effectuer des opérations de protection pour protéger au moins une partie de ladite combinaison ou cascade ou dudit pipeline de deux ou plusieurs moteurs d'intelligence artificielle ou d'apprentissage automatique ou d'apprentissage profond.

13. Système (100) selon l'une quelconque des revendications 1-12,
dans lequel l'unité de protection en ligne (123) est configurée pour introduire et pour invoquer un module de prétraitement qui effectue un prétraitement défensif des signaux d'entrée qui sont dirigés vers ledit Moteur Protégé (101).

14. Système (100) selon l'une quelconque des revendications 1-13,
dans lequel l'unité de protection en ligne (123) est configurée pour introduire et pour invoquer un module de post-traitement qui effectue un post-traitement défensif des signaux de sortie qui sont générés et émis par ledit Moteur Protégé (101) avant leur transmission aux destinataires prévus.
